(19)

Europäisches Patentamt
European Patent Office
Office européen des brevets

(11) **EP 2 399 742 A1**

(12) **EUROPEAN PATENT APPLICATION**

(43) Date of publication:
  **28.12.2011 Bulletin 2011/52**

(21) Application number: **11007482.0**

(22) Date of filing: **19.06.2007**

(51) Int Cl.:
  **B32B 33/00** (2006.01)   **B65G 59/06** (2006.01)
  **D21F 11/00** (2006.01)   **A61K 9/10** (2006.01)
  **D21H 21/36** (2006.01)   **D21F 11/14** (2006.01)

(84) Designated Contracting States:
  **AT BE BG CH CY CZ DE DK EE ES FI FR GB GR HU IE IS IT LI LT LU LV MC MT NL PL PT RO SE SI SK TR**

(30) Priority: **23.06.2006 US 815983 P**
  **18.06.2007 US 820067**

(62) Document number(s) of the earlier application(s) in accordance with Art. 76 EPC:
  **07809687.2 / 2 032 361**

(71) Applicant: **Georgia-Pacific Consumer Products LP Atlanta GA 30303 (US)**

(72) Inventors:
  • **Luu, Phuong V.**
    **AppletonAppleton, WI 54913**
    **WI 54913 (US)**
  • **Awofeso, Anthony O.**
    **Appleton, WI 54914 (US)**

  • **Yardley, Craig D.**
    **Roswell, GA 30076 (US)**
  • **Chou, Hung Liang**
    **Neenah, WI 54956 (US)**
  • **Mccullough, Stephen J.**
    **Mount Calvary, WI 53057 (US)**
  • **Janda, Bruce W.**
    **Hortonville, WI 54944 (US)**
  • **Yeh, Kang Chang**
    **Neenah, WI 54956 (US)**

(74) Representative: **Grünecker, Kinkeldey, Stockmair & Schwanhäusser**
  **Leopoldstrasse 4**
  **80802 München (DE)**

Remarks:
  This application was filed on 14-09-2011 as a divisional application to the application mentioned under INID code 62.

(54)   **Antimicrobial hand towel for touchless automatic dispensers**

(57)   A disposable anti-microbial paper towel and dispensing method includes disposing paper towel in an automatic touchless dispenser which is adapted to generate a touchless proximity signal upon nearness of a consumer, and dispensing the paper towel in response to the proximity signal. A typical invention towel has: (i) a cellulosic web characterized in that the web is substantially without crepe bars and has an unlotioned MD bending length of at least 3.5 cm; and (ii) a transferable lotion composition comprising an emollient and anti-microbial agent, the lotion composition being immobilized on the cellulosic web in a semi-solid or solid form. The transferable lotion composition is selected from lotion compositions which are transferable upon contact with water or lotion compositions which are transferable upon application of body heat.

EP 2 399 742 A1

**Description**

<u>Claims for Priority</u>

This application is based upon United States Provisional Patent Application Serial No. 60/815,983 of the same title (Attorney Docket No. 12497 (gap-05-21), filed June 23, 2006, the priority of which is hereby claimed and the disclosure of which is incorporated herein by reference.

<u>Technical Field</u>

The present invention relates to disposable paper towels and more particularly to a disposable paper towel with an anti-microbial lotion for touchless dispensers.

<u>Background</u>

Frequent hand washing is an important, perhaps critical, aspect of proper hygiene; especially important in the health care and food service industries. *Collopy* in United States Patent Publication No. US 2002/0061500 discloses a hand-washing device containing a display panel that encourages the user to wash their hands for about 15 seconds to remove germs. *Gorra*, United States Patent No. 5,945,910 discloses method and apparatus for monitoring and reporting hand washing, which includes a sensor for signaling the dispensation of a cleaning agent from a dispenser, and a reporting and monitoring module. *Allen et al.*, United States Patent No. 5,781,942 discloses wash stations and method of operation, which monitors hand washing and assists in hand washing. These systems are relatively expensive and difficult to implement; oftentimes involving training and monitoring personnel. Even when such steps have been taken, there is little certainty that all personnel have followed proper washing procedures.

Harsh soaps and cleansing agents can irritate the skin and damage the acid mantle of the skin, malcing programs promoting frequent hand washing particularly difficult to implement.

Touchless automatic towel dispensers introduced in recent years provide better hygiene and superior dispensing control. Such dispensers are seen in the following patents: *Sheet Material Dispenser with Perforation Sensor and Method,* United States Patent No. 6,766,977 to Denen et al. which discloses a paper dispenser releasing individual sheets of paper in response to movement (once the dispenser detects movement, it releases paper and activates a perforation sensor to stop advancement of the roll of paper after a set number of rotations); *Waste Minimizing Paper Dispenser,* United States Patent No. 6,793,170 to Denen et al. describes a dispenser for dispensing paper from two rolls, wherein the dispenser releases paper from the first roll until a sensor detects its reduction to a predetermined size whereupon the dispenser releases paper from both rolls until one of the rolls is depleted; *Minimizing Paper Waste Carousel-Style Dispenser, Sensor, Method and System with Proximity Sensor*, United States Patent No. 6,592,067 to Denen et al. which discloses and claims an apparatus dispensing paper upon detection of a hand next to it, and which has a movement sensor containing an electrical circuit measuring change of capacitance as a result of proximity of a hand; see also *Proximity Detection Circuit and Method of Detecting Small Capacitance Changes*, United States Patent No. 6,838,887 where there is described a second miniaturized circuit that is added for detecting proximity of a hand; as well as *Static Build Up in Electronic Dispensing System.* United States Patent No. 6,871,815 to Moody et al. which provides for a system for dissipating static electrical build up to local ground via a metal contact between the high conductivity pathway and, for example, the wall against which the dispenser is mounted. Further features are seen in United States Patents Nos. 6,412,678 and 6,321,963 to Gracyalny et ale

Conventional wet-pressed towel does not perform well in some of the most popular touchless dispensers, however, having unacceptably high dispensing failure rates.

Despite plentiful art, there exists a need for simple and effective means for promoting hygiene and skin care concurrently in connection with hand washing. The present invention provides a disposable paper towel with relatively high MD bending length and an anti-microbial skin care lotion suitable for automatic touchless dispensers of the class noted above.

<u>Summary of the Invention</u>

Generally speaking, the present invention provides lotioned towel which provides skin care and anti-microbial activity. Numerous attributes make the lotioned towels of the invention especially suitable for towels used by healthcare and food service workers. In one preferred embodiment, a pH balancing agent is used, while another aspect of the invention involves increased WAR times. This latter feature, while usually undesirable in a towel product, promotes anti-microbial lotion transfer to the skin as well, since a user will rub the towel longer when drying his or her hands. Lotion transfer is extremely important for both skin care and anti-microbial effectiveness as will be appreciated by one of the skill in the art. The towel of the invention has relatively high MD bending length such that it is suitable for automatic touchless dispensers that sense nearness of a user's hand for example, and dispense a predetermined amount of towel in response to that presence.

There is provided in one aspect of the invention an anti-microbial paper towel for use with touchless automatic dispensers made from a cellulosic web characterized in that the web is substantially without crepe bars and has an unlotioned MD bending length of at least about 3 or, in most cases, at least about 3.5 cm provided with a transferable lotion composition comprising an emollient and anti-microbial agent, the lotion composition being immobilized on the cellulosic web in a semi-solid or solid form. The transferable lotion composition is selected from lotion compositions which are transferable upon contact with water or lotion compositions which are transferable upon application of body heat (i.e., about 37°C). Details concerning these compositions will be appreciated from the discussion which follows.

The towel of the invention may be a single-ply towel, a two-ply towel or a three-ply towel if so desired and may be provided with identifying indicia, such as a green MD stripe, indicating its anti-microbial lotion features.

Brief Description of Drawings

The invention is described in detail below with reference to the drawings wherein like numbers designate similar parts and wherein:

**Figure 1** is a view in perspective of an automatic touchless dispenser provided with anti-microbial towel of the invention;

**Figures 2-6** are photomicrographs of TAD sheets suitable for automatic towel dispensers;

**Figures 7-11** are photomicrographs of fabric-creped sheet suitable for automatic towel dispensers;

**Figure 12** is a schematic diagram of a first papermachine suitable for producing fabric-creped webs;

**Figure 13** is a schematic diagram of a second papermachine suitable for producing fabric-creped webs;

**Figures 14** and **15** are photomicrographs of uncreped TAD sheet;

**Figures 16** and **17** are photomicrographs of fabric-creped, peeled sheet;

**Figures 18** and **19** are graphs comparing tensile properties ofuncreped TAD sheet and the fabric creped, peeled sheet prepared as described herein;

**Figure 20** is a partial phase diagram of the composition of Lotion Example 1 showing the phase characteristics of a waterless micro-emulsion; and

**Figure 21** is a partial phase diagram of the composition of Lotion Example 1 with water showing the phase behavior of a mixture of the composition of Example 1 with water.

Detailed Description

The invention is described in detail below with reference to several embodiments and numerous examples. Such discussion is for purposes of illustration only. Modifications to particular examples within the spirit and scope of the present invention, set forth in the appended claims, will be readily apparent to one of skill in the art.

Terminology used herein is given its ordinary meaning consistent with the exemplary definitions set forth immediately below; mg refers to milligrams and $m^2$ refers to square meters and so forth. Unless otherwise specified, test specimens are prepared under standard TAPPI conditions; that is, conditioned in an atmosphere of $23° \pm 1.0°C$ (73.4°: 1: 1.8°F) at 50% relative humidity for at least about 2 hours.

Throughout this specification and claims, when we refer to a nascent web having an apparently random distribution of fiber orientation (or use like terminology), we are referring to the distribution of fiber orientation that results when known forming techniques are used for depositing a furnish on the forming fabric. When examined microscopically, the fibers give the appearance of being randomly oriented even though, depending on the jet to wire speed, there may be a significant bias toward machine direction orientation making the machine direction tensile strength of the web exceed the cross-direction tensile strength.

Unless otherwise specified, "basis weight", BWT, bwt and so forth refers to the weight of a 3000 square foot (279 square meter) ream of product. Consistency refers to percent solids of a nascent web, for example, calculated on a bone dry basis. "Air dry" means including residual moisture, by convention up to about 10 percent moisture for pulp and up to about 6% for paper. A nascent web having 50 percent water and 50 percent bone dry pulp has a consistency of 50 percent.

The term "cellulosic", "cellulosic sheet" and the like is meant to include any product incorporating papermaking fiber having cellulose as a major constituent. "Papermaking fibers" include virgin pulps or recycle (secondary) cellulosic fibers or fiber mixes comprising cellulosic fibers. Fibers suitable for making the webs of this invention include: nonwood fibers, such as cotton fibers or cotton derivatives, abaca, kenaf, sabai grass, flax, esparto grass, straw, jute hemp, bagasse, milkweed floss fibers, and pineapple leaf fibers; and wood fibers such as those obtained from deciduous and coniferous trees, including softwood fibers, such as northern and southern softwood kraft fibers; and hardwood fibers, such as eucalyptus, maple, birch, aspen, or the like. Papermaking fibers can be liberated from their source material by any one of a number of chemical pulping processes familiar to one experienced in the art including sulfate, sulfite, polysulfide, soda pulping, etc. The pulp can be bleached if desired by chemical means including the use of chlorine, chlorine dioxide, oxygen, alkaline peroxide and so forth. The products of the present invention may comprise a blend of conventional fibers (whether derived from virgin pulp or recycle sources) and high coarseness lignin-rich tubular fibers, such as bleached chemical thermomechanical pulp (BCTMP). "Furnishes" and like terminology refers to aqueous compositions including papermaking fibers, optionally wet strength resins, debonders and the like for making paper products.

In some embodiments furnishes consist predominantly (more than 50% by weight of fiber) of softwood (SW) fiber such as Douglas fir. Southern Softwood Kraft (SSWK) is also a preferred fiber. In some embodiments large amounts of recycle fiber, which is typically predominantly hardwood (HW) fiber is used. Recycle fiber is in many cases 80% by weight fiber or more hardwood fiber.

As used herein, the term compactively dewatering the web or furnish refers to mechanical dewatering by wet pressing on a dewatering felt, for example, in some embodiments by use of mechanical pressure applied continuously over the web surface as in a nip between a press roll and a press shoe wherein the web is in contact with a papermaking felt. The terminology "compactively dewatering" is used to distinguish processes wherein the initial dewatering of the web is carried out largely by thermal means as is the case, for example, in United States Patent No. 4,529,480 to Trokhan and United States Patent No. 5,607,551 to Farrington et al. noted above. Compactively dewatering a web thus refers, for example, to removing water from a nascent web having a consistency of less than 30 percent or so by application of pressure thereto and/or increasing the consistency of the web by about 15 percent or more by application of pressure thereto; that is, for example, increasing the consistency of the web from 30 percent to 45 percent.

Creping fabric and like terminology refers to a fabric or belt which bears a pattern suitable for fabric creping a wet web and preferably is permeable enough such that the web may be dried while it is held in the creping fabric. In cases where the web is transferred to another fabric or surface (other than the creping fabric) for drying, the creping fabric may have lower permeability.

"Fabric side" and like terminology refers to the side of the web which is in contact with the creping fabric. "Dryer side" or "Yankee side" is the side of the web in contact with the drying cylinder, typically opposite the fabric side of the web.

"fpm" refers to feet per minute (mpm refers to meters per minute).

A "like" web produced by "like" means refers to a web made from substantially identical equipment in substantially the same way; that is with substantially the same overall crepe, fabric crepe, nip parameters and so forth.

MD means machine direction and CD means cross-machine direction.

Nip parameters include, without limitation, nip pressure, nip width, roll diameters, backing roll hardness, fabric approach angle, fabric takeaway angle, uniformity, nip penetration and velocity delta between surfaces of the nip.

Nip width means the MD length over which the nip surfaces are in contact.

A translating transfer surface refers to the surface from which the web is creped into the creping fabric. The translating transfer surface may be the surface of a rotating drum as described hereafter, or may be the surface of a continuous smooth moving belt or another moving fabric which may have surface texture and so forth. The translating transfer surface needs to support the web and facilitate the high solids creping as will be appreciated from the discussion which follows.

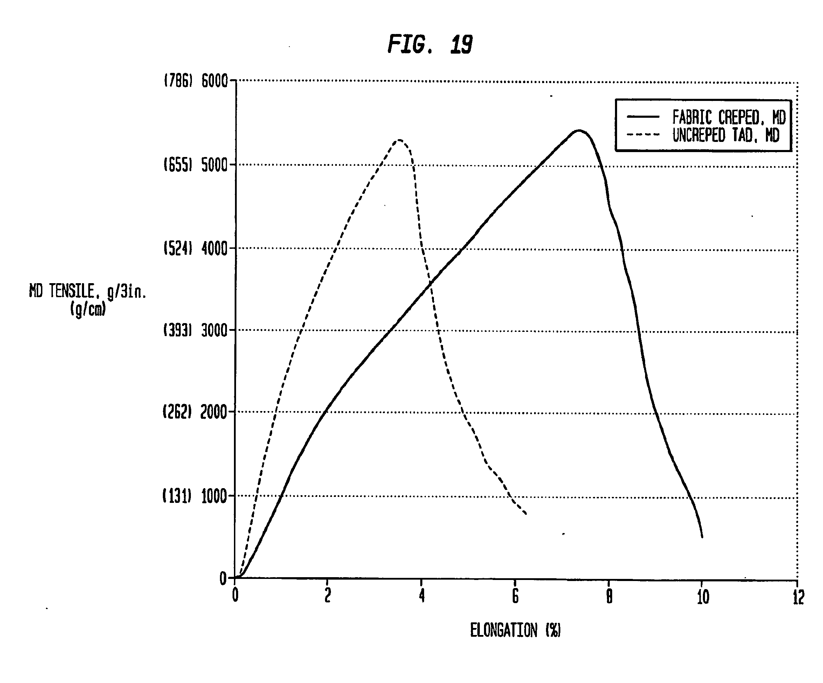

Unless otherwise specified, when we refer to uncreped throughdried products, we are not referring to products manufactured by way of a process involving numerous rush transfers between fabrics; rather we refer to products which are at least partially throughdried and further dried without creping. These products have relatively low MD stretch as is seen in **Figure 19** in particular. Typically, rush transfer is carried out using suction to assist in detaching the web from the donor fabric and thereafter attaching it to the receiving or receptor fabric. In contrast, suction is not required in a fabric creping step, so accordingly when we refer to fabric creping as being "under pressure" we are referring to loading of the receptor fabric against the transfer surface, although suction assist can be employed at the expense of further complication of the system so long as the amount of suction is not sufficient to interfere with rearrangement or redistribution of the fiber. United States Patent No. 5,607,551 to Farrington. Jr. et al. describes an uncreped, throughdried product which has undergone numerous rush transfers.

Calipers and/or bulk reported herein may be measured at 8 or 16 sheet calipers as specified. The sheets are stacked and the caliper measurement is taken about the central portion of the stack. Preferably, the test samples are conditioned in an atmosphere of 23° ± 1.0°C (73.4° ± 1.8°F) at 50% relative humidity for at least about 2 hours and then measured with a Thwing-Albert Model 89-11-JR or Progage Electronic Thickness Tester with 2-in (50.8-mm) diameter anvils, 539 ± 10 grams dead weight load, and 0.231 in./sec (0.587 cm/sec) descent rate. For finished product testing, each sheet of product to be tested must have the same number of plies as the product as sold. For testing in general, eight sheets are selected and stacked together. For napkin testing, napkins are unfolded prior to stacking. For base sheet testing off of winders, each sheet to be tested must have the same number of plies as produced off the winder. For base sheet testing off of the papermachine reel, single plies must be used. Sheets are stacked together aligned in the MD. On custom embossed or printed product, try to avoid taking measurements in these areas if at all possible. Bulk may also be expressed in units of volume/weight by dividing caliper by basis weight.

MD bending length (cm) is determined in accordance with ASTM test method D 1388-96, cantilever option. Reported bending lengths refer to MD bending lengths unless a CD bending length is expressly specified. The MD bending length test was performed with a Cantilever Bending Tester available from Research Dimensions, 1720 Oakridge Road, Neenah, Wisconsin 54956, which is substantially the apparatus shown in the ASTM test method, item 6. The instrument is placed on a level stable surface, horizontal position being confirmed by a built in leveling bubble. The bend angle indicator is set at 41.5° below the level of the sample table. This is accomplished by setting the knife edge appropriately. The sample is cut with a one inch (2.54 cm) JD strip cutter available from Thwing-Albert Instrument Company, 14 Collins Avenue, W. Berlin, NJ 08091. Six (6) samples are cut into 1 inch x 8 inch (2.54 cm x 20.32 cm) machine direction specimens. Samples are conditioned at 23°C ± 1°C (73.4°F ± 1.8°F) at 50% relative humidity for at least two hours. For machine direction specimens the longer dimension is parallel to the machine direction. The specimens should be flat and free of wrinkles, bends or tears. The Yankee side of the specimens is also labeled. The specimen is placed on the horizontal platform of the tester aligning the edge of the specimen with the right hand edge. The movable slide is placed on the specimen, being careful not to change its initial position. The right edge of the sample and the movable slide should be set at the right edge of the horizontal platform. The movable slide is displaced to the right in a smooth, slow manner at approximately 5 in. /minute (12.7 cm/min) until the specimen touches the knife edge. The overhang length is recorded to the nearest 0.1 cm. This is done by reading the left edge of the movable slide. Three specimens are preferably run with the Yankee side up and three specimens are preferably run with the Yankee side down on the horizontal platform. The MD bending length is reported as the average overhang length in centimeters divided by two to account for bending axis location. Bending length refers to MD bending length unless specified otherwise.

Absorbency of the inventive products is measured with a simple absorbency tester. The simple absorbency tester is a particularly useful apparatus for measuring the hydrophilicity and absorbency properties of a sample of tissue, napkins, or towel. In this test, a sample of tissue, napkins, or towel, 2.0 inches (5.08 cm) in diameter, is mounted between a top flat plastic cover and a bottom grooved sample plate. The tissue, napkin, or towel sample disc is held in place by a 1/8 inch (0.32 cm) wide circumference flange area. The sample is not compressed by the holder. De-ionized water at 73°F (22.8°C) is introduced to the sample at the center of the bottom sample plate through a 1 mm. diameter conduit. This water is at a hydrostatic head of minus 5 mm. Flow is initiated by a pulse introduced at the start of the measurement by the instrument mechanism. Water is thus imbibed by the tissue, napkin, or towel sample from this central entrance point radially outward by capillary action. When the rate of water imbibation decreases below 0.005 gm water per 5 seconds, the test is terminated. The amount of water removed from the reservoir and absorbed by the sample is weighed and reported as grams of water per square meter of sample or grams of water per gram of sheet. In practice, an M/K Systems Inc. Gravimetric Absorbency Testing System is used. This is a commercial system obtainable from M/K Systems Inc., 12 Garden Street, Danvers, Mass., 01923. WAC or water absorbent capacity, also referred to as SAT, is actually determined by the instrument itself. WAC is defined as the point where the weight versus time graph has a "zero" slope, i.e., the sample has stopped absorbing. The termination criteria for a test are expressed in maximum change in water weight absorbed over a fixed time period. This is basically an estimate of zero slope on the weight versus time graph. The program uses a change of 0.005g over a 5 second time interval as termination criteria; unless "Slow SAT" is specified in which case the cut off criteria is 1 mg in 20 seconds.

Water absorbency rate, or WAR, is measured in seconds and is the time it takes for a sample to absorb a 0.1 gram droplet of water disposed on its surface by way of an automated syringe. The test specimens are preferably conditioned at 23° C ± 1° C (73.4 ± 1.8°F) at 50 % relative humidity. For each sample, 4 3x3 inch (7.6x7.6 cm) test specimens are prepared. Each specimen is placed in a sample holder such that a high intensity lamp is directed toward the specimen. 0.1 ml of water is deposited on the specimen surface and a stop watch is started.

When the water is absorbed, as indicated by lack of further reflection of light from the drop, the stopwatch is stopped and the time recorded to the nearest 0.1 seconds. The procedure is repeated for each specimen and the results averaged for the sample. WAR is measured in accordance with TAPPI method T-432 cm-99. The water absorption rate delay in percent is calculated from the WAR values of the unlotioned cellulosic web and lotioned sheet product of the invention as follows:

$$\text{Absorption rate delay} =$$

$$\text{(WAR value of lotioned cellulosic sheet} - \text{WAR value of unlotioned cellulosic}$$

$$\text{web)} \div \text{(WAR value of unlotioned cellulosic web)} \times 100\%$$

"Aqueous gel" refers to viscous lotion/water compositions typically having a room temperature viscosity of above about 500 cps at room temperature (about 23° ± 1°C) and typically above about 1000 cps at room temperature. Preferred lotion compositions form gels of more than 1500 cps at room temperature as is seen in Table 2 below.

Dry tensile strengths (MD and CD), stretch, ratios thereof, modulus, break modulus, stress and strain are measured with a standard Instron test device or other suitable elongation tensile tester which may be configured in various ways, typically using 3 or 1 inch (7.6 or 2.54 cm) wide strips of tissue or towel, conditioned in an atmosphere of 23° ± 1°C (73.4° ± 1°F) at 50% relative humidity for 2 hours. The tensile test is run at a crosshead speed of 2 in/min (5.08 cm/min). Break modulus is expressed in grams/3 inches/ % strain (grams/cm/%strain). % strain is dimensionless and need not be specified. Tensile strength is sometimes referred to simply as "tensile".

TEA is a measure of toughness and is reported CD TEA, MD TEA, or GM TEA. Total energy absorbed (TEA) is calculated as the area under the stress-strain curve using the a tensile tester as has been previously described above. The area is based on the strain value reached when the sheet is strained to rupture and the load placed on the sheet has dropped to 65 percent of the peak tensile load. Since the thickness of a paper sheet is generally unknown and varies during the test, it is common practice to ignore the cross-sectional area of the sheet and report the "stress" on the sheet as a load per unit length or typically in the units of grams per 3 inches (7.62 cm) of width. For the TEA calculation, the stress is converted to grams per millimeter and the area calculated by integration. The units of strain are millimeters per millimeter so that the final TEA units become $\text{g-mm/mm}^2$.

The modulus of a product (also referred to as stiffness modulus or tensile modulus) is determined by the procedure for measuring tensile strength described above, wherein the modulus recorded is the chord slope of the load/ elongation curve measured over the range of 0-50 grams load. "Break Modulus" is the stress at break divided by the elongation at break also tested on a 3" (7.62 cm) wide sample; these values are usually appreciably higher than the modulus at 0-50 grams load.

GM Break Modulus is expressed in grams/3 inches/ %strain (grams/cm/%strain). % strain is dimensionless and units need not be specified. Tensile values refer to break values unless otherwise indicated. Tensile strengths are reported in g/3" (grams/cm) at break. GM Break Modulus is thus:

$$[(\text{MD tensile} / \text{MD Stretch at break}) \times (\text{CD tensile} / \text{CD Stretch at break})]^{1/2}$$

Percent means weight percent unless otherwise indicated and refers to weight percent without water unless the inclusion of the water weight is expressly indicated. Weight percent softwood fiber and like terminology or expressions refer to the weight percent of softwood fiber based on fiber content of a product or composition only, exclusive of other ingredients.

"Waterless", "substantially waterless" and like terminology refers to compositions which include generally less than about 10% by weight water. In cases where water is present at all, water is preferably not added as such, but is contained in other ingredients.

Tensile ratios are simply ratios of the values determined by way of the foregoing methods. Unless otherwise specified, a tensile property is a dry sheet properly.

The wet tensile of the tissue of the present invention is measured using a three-inch (7.62 cm) wide strip of tissue that is folded into a loop, clamped in a special fixture termed a Finch Cup, then immersed in water. The Finch Cup, which is available from the Thwing-Albert Instrument Company of Philadelphia, Pa., is mounted onto a tensile tester equipped with a 2.0 pound (0.907 kg) load cell with the flange of the Finch Cup clamped by the tester's lower jaw and the ends of tissue loop clamped into the upper jaw of the tensile tester. The sample is immersed in water that has been adjusted to a pH of 7.0± 0.1 and the tensile is tested after a 5 second immersion time. Results are divided by two to account for the loop unless otherwise specified. Values are divided by two, as appropriate, to account for the loop.

Wet/dry tensile ratios are expressed in percent by multiplying the ratio by 100. For towel products, the wet/dry CD tensile ratio is the most relevant. Throughout this specification and claims which follow "wet/dry ratio" or like terminology refers to the wet/dry CD tensile ratio unless specifically indicated otherwise.

"Fabric crepe ratio" is an expression of the speed differential between the creping fabric and the forming wire and typically calculated as the ratio of the web speed immediately before fabric creping and the web speed immediately

following fabric creping, the forming wire and transfer surface being typically, but not necessarily, operated at

the same speed:

$$\text{Fabric crepe ratio} = \text{transfer cylinder speed} \div \text{creping fabric speed}$$

Fabric crepe can also be expressed as a percentage calculated as:

$$\text{Fabric crepe \%} = [\text{Fabric crepe ratio} - 1] \times 100\%$$

A web creped from a transfer cylinder with a surface speed of 750 fpm (228.8 m/min) to a fabric with a velocity of 500 fpm (152.5 m/min) has a fabric crepe ratio of 1.5 and a fabric crepe of 50%.

The total crepe ratio is calculated as the ratio of the forming wire speed to the reel speed and a % total crepe is:

$$\text{Total Crepe \%} = \left[\text{Total Crepe Ratio} - 1\right] \times 100\%$$

A process with a forming wire speed of 2000 fpm (610 m/min) and a reel speed of 1000 fpm (305 m/min) has a line or total crepe ratio of 2 and a total crepe of 100%.

PLI or pli means pounds force per linear inch (kg force per linear centimeter (plcm)).

Pusey and Jones (P&J) hardness (indentation) is measured in accordance with ASTM D 531, and refers to the indentation number (standard specimen and conditions).

Velocity delta means a difference in linear speed.

Described in more detail hereafter is a method of making a suitable fabric-creped absorbent cellulosic web with improved dispensing characteristics, which method includes: a) compactively dewatering a papermaking furnish to form a nascent web; b) applying the dewatered web to a translating transfer surface moving at a first speed; c) fabric-creping the web from the transfer surface at a consistency of from about 30 to about 60 percent utilizing a patterned creping fabric, the creping step occurring under pressure in a fabric creping nip defined between the transfer surface and the creping fabric wherein the fabric is traveling at a second speed slower than the speed of said transfer surface, the fabric pattern, nip parameters, velocity delta and web consistency being selected such that the web is creped from the transfer surface and transferred to the creping fabric; d) adhering the web to a drying cylinder with a resinous adhesive coating composition; e) drying the web on the drying cylinder; and f) peeling the web from the drying cylinder. The furnish, creping fabric and creping adhesive are selected and the velocity delta, nip parameters and web consistency, caliper and basis weight are controlled such that the MD bending length of the dried web is at least about 3 cm. Generally, the MD bending length of the dried web is from about 3.5 cm to about 5 cm and more preferably the MD bending length of the dried web is from about 3.75 cm to about 4.5 cm.

The process is suitably operated at a fabric crepe of from about 1% to about 30%, and typically operated at a fabric crepe of from about 2% to about 15%.

The dried (unlotioned) web generally exhibits a WAR value of less than about 35 seconds; typically, the dried web exhibits a WAR value of less than about 30 or 25 seconds such as a WAR value of from about 10 to about 20 seconds.

The papermaking furnish typically comprises a wet strength resin as well as a dry strength resin. In a preferred embodiment, the papermaking furnish comprises a wet strength resin and as a dry strength resin carboxymethyl cellulose and/or polyacrylamide, with the proviso that the wet strength resin add-on rate is less than about 20 lbs per ton (10 kg/mton) of papermaking fiber.

A creping adhesive is also used. In preferred embodiments the resinous adhesive coating composition is employed at an add-on rate of less than about 40 mg/m$^2$ of drier surface, such as less than about 35 mg/m$^2$ or less than about 25 mg/m$^2$. The creping adhesive add-on rate is calculated by dividing the rate of application of adhesive (mg/min) by surface area of the drying cylinder passing under the spray applicator boom (m$^2$/min). The resinous adhesive composition most preferably consists essentially of a polyvinyl alcohol (PVOH) resin and a polyamide-epichlorohydrin resin wherein the weight ratio of polyvinyl alcohol resin to polyamide-epichlorohydrin resin is from about 2 to about 4.

Preferably, the furnish is predominantly SW pulp, such as Douglas fir pulp. Optionally, the furnish comprises recycle pulp.

Optionally, the process further comprises on-line calendering the web with a calender stack prior to winding the web on a roll, wherein the calender stack is synchronized with the reel prior to loading the calender stack. A calender loading of anywhere from 10-35 pli (1.8-6.3 plcm) is suitable. Typically, the web is tensioned between the drying cylinder and the calender stack with a spreader bar or bow roll. The web also may be tensioned between the calender stack and the reel with an interposed spreader bar or roll.

Preferably, the web has an absorbency of at least about 3 g/g, typically at least about 3.5 g/g or at least about 4.5 g/g. In still another embodiment, the web has an absorbency of at least about 5 or 5.5 g/g.

In still further aspects of the invention, cellulosic webs with the attributes listed in Table 1 are provided. All or any number of the listed attributes may be embodied in a particular product of the invention. It will be appreciated from the discussion which follows that these attributes are achieved by selecting the furnish, creping fabric and creping adhesive and controlling the velocity delta, nip parameters and web consistency at various points in the process, with consistency after peeling from the Yankee being particularly useful. Moisture content of 2½-5% (bone dry basis) upon peeling is preferred. In many cases, the fabric creping techniques revealed in the following co-pending applications will be especially suitable: United States Patent Application Serial No. 11/678,669, entitled "Method of Controlling Adhesive Build-Up on a Yankee Dryer" (Attorney Docket No. 20140; GP-06-1); United States Patent Application Serial No. 11/451,112 (Publication No. US 2006/0289133), filed June 12, 2006, entitled "Fabric-Creped Sheet for Dispensers" (Attorney Docket No. 20195; GP-06-12); United States Patent Application Serial No. 11/451,111, filed June 12, 2006 (Publication No. US 2006-0289134), entitled "Method of Making Fabric-Creped Sheet for Dispensers" (Attorney Docket No. 20079; GP-05-10); United States Patent Application Serial No. 11/402,609 (Publication No. US 2006-0237154); filed April 12, 2006, entitled "Multi-Ply Paper Towel With Absorbent Core" (Attorney Docket No. 12601; GP-04-11); United States Patent Application Serial No. 11/151,761, filed June 14, 2005 (Publication No. US 2005/0279471), entitled "High Solids Fabric-Crepe Process for Producing Absorbent Sheet with In-Fabric Drying" (Attorney Docket 12633; GP-03-35); United States Patent Application Serial No. 11/108,458, filed April 18, 2005 (Publication No. US 2005-0241787), entitled "Fabric-Crepe and In Fabric Drying Process for Producing Absorbent Sheet" (Attorney Docket 12611P1; GP-03-33-1); United States Patent Application Serial No. 11/108,375, filed April 18, 2005 (Publication No. US 2005-0217814), entitled "Fabric-Crepe/Draw Process for Producing Absorbent Sheet" (Attorney Docket No. 12389P1; GP-02-12-1); United States Patent Application Serial No. 11/104,014, filed April 12, 2005 (Publication No. US 2005-0241786), entitled "Wet-Pressed Tissue and Towel Products With Elevated CD Stretch and Low Tensile Ratios Made With a High Solids Fabric-Crepe Process" (Attorney Docket 12636; GP-04-5); United States Patent Application Serial No. 10/679,862 (Publication No. US 2004-0238135), filed October 6, 2003, entitled "Fabric-Crepe Process for Making Absorbent Sheet" (Attorney Docket. 12389; GP-02-12); United States Provisional Patent Application Serial No. 60/903,789, filed February 27, 2007, entitled "Fabric Crepe Process With Prolonged Production Cycle" (Attorney Docket 20216; GP-06-16); and United States Patent Application Serial No. 11/804,246, filed May 16, 2007, entitled "Fabric-creped Absorbent Sheet with Variable Local Basis Weight" (Attorney Docket No. 20179; GP-06-11). The applications referred to immediately above are particularly relevant to the selection of machinery, materials, processing conditions and so forth as to fabric creped products of the present invention and the disclosures of these applications are incorporated herein by reference.

Throughdried (TAD) sheet is likewise a suitable web for use in connection with the present invention. Throughdrying processes generally are described in the following: United States Patent No. 3,994,771 to Morgan, Jr. et al.; United States Patent No. 4,102,737 to Morton; and United States Patent No. 4,529,480 to Trokhan. The processes described in these patents comprise, very generally, forming a web on a foraminous support, thermally pre-drying the web, applying the web to a Yankee dryer with a nip defined, in part, by an impression fabric, and creping the product from the Yankee dryer. A relatively permeable web is typically required, making it difficult to employ recycle furnish at levels which may be desired. Transfer to the Yankee typically takes place at web consistencies of from about 60% to about 70%. To preserve high bending length, throughdried sheet may be peeled, rather than creped from the Yankee or creped at very low reel crepe. Peeled throughdried sheet is referred to as uncreped throughdried sheet. *See* United States Patent No. 6,187,137 to Druecke et al. which includes description of peeling a web from a Yankee dryer. Throughdried, uncreped sheet suitable for use in connection with the present invention may be prepared by way of multi-fabric transfer in accordance with United States Patent No. 5,607,551 to Farrington, Jr. et al. and is also described in United States Patent Nos.: 5,888,347; 5,667,636; 5,614,293; and 5,601,871. The disclosure of the foregoing patents is incorporated herein by reference in their entireties.

Table 1- Unlotioned Sheet Properties

| Property | General | Typical | Preferred |
|---|---|---|---|
| Basis Weight lbs / 3000 sq. ft. (gsm) | 10 - 40 (16.3 - 65.1) | 15 - 30 (24.4 - 48.8) | 18 - 28 (29.3 - 45.6) |
| MD Bending length (cm) | ≥3 | 3.5-5; 3.5-7; 3.5-10 | ≥3.75 |
| Caliper mils / 8 sheet (mm/8 sheet) | 30 - 100 (0.7 - 2.54) | 40 - 90 (1.02 - 2.29) | 45 - 65 (1.14 - 1.65) |
| CD wet / dry % | ≥20 | 22 - 35 | 23 - 26 |

(continued)

| Property | General | Typical | Preferred |
|---|---|---|---|
| CD wet tensile g / 3" (Finch) {g/cm} | ≥500 {≥65.6} | ≥ 750, ≥ 850; 600 - 1350 {≥ 98.4, ≥112 78.7 - 177} | 750 - 1200; 600 - 1350 {98.4 - 157 78.7 - 177} |
| GM Break modulus g/3in/%strain (g/cm/%strain) | 600 - 1200 (78.7 - 157) | 700 - 1100 (91.9 - 144) | ---- |
| MD Stretch % | ≥ 5; 5 - 20 | ≥ 6, ≥ 7; 5 - 8 | ≥ 7.5, ≥ 8, ≥ 9; 5-8 |
| SAT (g/g) | ≥ 2.5 | ≥ 3 or 4, ≥ 4.5; 3 - 5.5 | 4 - 5.5 |
| WAR (seconds) | ≤ 35 | ≤ 30, ≤ 25 | ≤ 20 10 - 20 |

The attributes set forth in Table 1 are those of the unlotioned sheet; in some embodiments the finished product itself, and not necessarily the unlotioned web, has these characteristics as well. Properties of lotioned towel of the invention appear in Table 2 below.

Table 2 - Lotioned Towel Properties

| Property | General | Typical | Preferred |
|---|---|---|---|
| Basis Weight lbs/3000 tt^2 {gsm} | 10 - 40 {16.3-65.1} | 15 - 30 {24.4 - 48.8} | 18 - 28 {29.3 - 45.6} |
| MD Bending Length (cm) | ≥3.0 | 3.0 - 5.0 | ≥ 3.25 |
| Caliper mils/8 st. {mm/8 sheet} | 30 - 100 {0.76-2.54} | 40 - 90 {1.02-2.29} | 45 - 65 {t.14-1.65} |
| CD Wet/Dry (%) | ≥ 25 | 27 - 38 | 29-34 |
| CD Wet g/3" {g/cm} | ≥ 500 {≥ 65.6} | 600 - 1350 {78.7-177} | 750 - 1200 {98.4 - 157} |
| GM Break Modulus (g/cm/%strain) | 300 - 1000 (39.4 - 131) | 400 - 800 (39.4 - 131) | 500 - 900 (65.6-118) |
| MD Stretch (%) | 4 - 15 | 5 - 12 | 6 - 10 |
| SAT (g/g) | ≥ 2.8 | 2.8 - 5.0 | 3.0 - 4.0 |
| WAR (see) | ≤ 80 | ≤ 75 | ≤ 70 |

It is seen in Table 2 that the lotioned towel exhibits elevated CD wet/dry ratio; longer WAR times and lowered GM break modulus. The higher CD wet/dry ratio is particularly beneficial for hand feel, while the lower modulus indicates lower stiffness; a beneficial property for softness perception. Suitable CD wet/dry tensile ratios are from about 25-40%; sometimes at least 27.5%, at least 28% or at least 30%. Values of at least 32% or at least 35% are readily obtained. Further details are seen in Table 13, wherein it is shown the lotioned sheet exhibits lower tensiles than the unlotioned sheet. The lotion is usually applied in amounts of from about 2 weight percent to about 20 weight percent based on the amount of fiber in the sheet, i.e., 2g - 20g lotion solids per hundred weight fiber.

In some cases, particularly where a large percentage of recycle fiber is used in lower basis weight products, WAR values of up to 100 seconds have been obtained and found to be quite suitable.

Lotion is applied to the web by printing or any other suitable technique. The lotion may be an emulsion lotion or a so-called "hot" lotion which is heated during application to the web. Further details are found in co-pending United States Patent Application Serial No. 11/728,407, entitled "Antimicrobial Hand Towel With Time-Delay Chromatic Transfer Indicator And Absorbency Rate Delay", filed March 26, 2007 (Attorney Docket No. 12635/12S2S; GP-05-6), the disclosure of which is incorporated herein by reference in its entirety. Also incorporated herein by reference are the following United States Patents and copending patent applications: United States Patent No. 6,352,700 to Luu et al; United States Patent No. 5,871,763, also to Luu et al.; United States Patent Application Serial No. 11/297,201 (Publication No. US 2006/0110432) filed December 8, 2005, of *Luu et al.* (Attorney Docket No. 12216P 1; GP-05-6-1); United States Patent Application Serial No. 11/557,782, filed November 8, 2006 of *Luu et al.* (Attorney Docket No. 20117; GP-05-17); and United States Patent No. 7,169,400, issued January 30, 2007, to Luu et al.

Generally, the lotion composition includes from about 0.01 percent by weight to about 10 percent by weight of an anti-microbial agent; more typically the lotion composition comprises from about 0.05 percent by weight to about 5 percent by weight anti-microbial agent. Suitable anti-microbial agents are selected from: 2,4,4'-trichloro-2'-hydroxydiphenyl ether (triclosan); 3,4,4'-trichlorocarbanilide (triclocarban); 3,4,4'-trifluoromethyl-4,4'-d-ichlorocarbanilide (cloflucarban); 5-chloro-2-methyl-4-isothiazolin-3-one; iodopropynlbutylcarbamate; 8-hydroxyquinoline; 8-hydroxyquinoline citrate; 8-hydroxyquinoline sulfate; 4-chloro-3,5-xylenol(chloroxylenol); 2-bromo-2-nitropropane-1,3-diol; diazolidinyl urea; butoconazole; nystatin; terconazole; nitrofurantoin; phenazopyridine; acyclovir; clortrimazole; chloroxylenol; chlorhexidine; chlorhexidine gluconate; miconazole; terconazole; butylparaben; ethylparaben; methylparaben; methylchloroisothiazoline; methylisothiazoline; a mixture of 1,3-bis(hydroxymethyl)-5,5-dimethylhydantoin and 3-iodo-2-propynyl butyl carbamate; oxyquinoline; EDTA; tetrasodium EDTA; p-hydroxyl benzoic acid ester; alkyl pyridinum compounds; coco phosphatidyl PG-dimonium chloride; chlorhexidene digluconate; chlorhexidene acetate; chlorhexidene isethionate; chlorhexidene hydrochloride; benzalkonium chloride; benzethonium chloride; polyhexamethylene biguanide; and mixtures thereof. So also, the anti-microbial agent may include a zinc salt.

An optional pH balancing agent typically includes an organic acid and optionally includes an organic acid/buffer combination such as citric acid and disodium phosphate. Another suitable buffer combination may include disodium citrate and sodium hydroxide. The pH balancing agent is generally applied to the web in an amount of from about 0.5 percent by weight to about 3 percent by weight of the lotion composition. More typically the pH balancing agent is applied to the web in an amount of from about 1 percent by weight to about 2 percent by weight of the lotion composition. The pH balancing agent may include an alpha hydroxy acid, an alpha di-hydroxy acid, a beta hydroxy acid or combinations thereof.

An optional pH-sensitive transfer indicator may include thymol blue, bromo cresol purple, methyl red, cresol red, phenolphthalein, thymolphthalein, or Alizarin yellow R. The pH balancing agent is applied to the web at a plurality of discreet pH balancing agent locations, whereas the pH-sensitive transfer indicator is applied to the web apart from the plurality of discreet pH balancing agent locations. Generally, the pH-sensitive transfer indicator is applied to the web at a plurality of discreet indicator locations whereas the pH balancing agent is applied to the web apart from the plurality of discreet indicator locations.

In some embodiments, the cellulosic web employed in connection with the invention is predominantly softwood fiber and includes a wet strength agent. Suitable wet strength agents may be selected from: aldehyde-containing polyols; aldehyde-containing cationic starch; glyoxal; glutaraldehyde; dialdehydes boric acid carbonate; zirconium ammonium carbonate; glyoxalated polyacrylamide; polyamide-epichlorohydrin; polyamine-epichlorohydrin; urea-formaldehyde; melamine-formaldehyde; polyethyleneimine; and latex emulsions.

In still other embodiments, the cellulosic web employed includes at least about 25% by weight of recycle fiber. Typically at least about 50% or 75% by weight of recycle fiber is utilized. In some cases 100% by weight of recycle fiber may be used.

In another aspect of the invention the transferable lotion is a lotion emulsion including an anti-microbial agent disposed on the web, the lotion emulsion including a polar emollient and a non-polar emollient as well as a surfactant composition comprising a non-ionic surfactant. The lotion emulsion is substantially liquid at room temperature; however, the emollients and surfactant composition are selected such that the lotion emulsion is immobilized on the web in a semi-solid or solid state when applied thereto. The lotion emulsion is preferably capable of forming an aqueous gel upon contact with water. The lotion emulsion includes a polar emollient in an amount of from about 2 percent by weight of the lotion emulsion to about 40 percent by weight of the lotion emulsion. The lotion emulsion may include a poly-hydroxy emollient selected from: propylene glycol; glycol; glycerol; diethylene glycol; methylene glycol; polypropylene glycol; polyethylene glycol and sorbitol. Further, the lotion emulsion may include a non-polar emollient in an amount of from about 10 percent by weight of the lotion emulsion to about 40 percent by weight of the lotion emulsion. Suitable non-polar emollients may be selected from: aromatic or linear esters; Guerbet ester; mineral oil; squalane; liquid paraffin, and mixtures thereof. Particular non-polar emollients which are suitable include isopropyl myristate and $C_{12}$-$C_{15}$ alkyl benzoate ester (Finsolv TN). Other suitable non-polar emollients are tri-octyldodecyl-citrate and a mixture of $C_{12}$-$C_{15}$ alkyl benzoate ester and carnation oil.

The surfactant composition may include a non-ionic surfactant and fatty alcohol in the amount of from about 40 percent by weight to about 70 percent by weight of the lotion emulsion. Suitable non-ionic surfactants include: PEG-20 methyl glucose sesquistearate; PPG-20 methyl glucose ether; PPG-20 methyl glucose ether distearate; PEG-20 methyl glucose distearate; PEG-120 methyl glucose dioleate; ethoxylated methyl glucose having from about 10 to about 20 repeating ethoxy units per molecule, a mixture thereof and the like.

In a preferred embodiment the surfactant composition comprises a co-surfactant in the amount of from about 0.1 percent to about 20 percent by weight of the lotion emulsion. The co-surfactant is suitably selected from $C_{12}$-$C_{18}$ fatty alcohols, behenyl alcohol, cetyl alcohol, stearyl alcohol, iso-cetyl alcohol, and isostearyl alcohol and mixtures thereof. One preferred co-surfactant is a mixture of cetyl alcohol and stearyl alcohol. Perhaps most preferably, the micro-emulsion is substantially waterless and capable of forming an aqueous micro-emulsion when mixed with water as will be appreciated from the examples appearing hereinafter.

Instead of a lotion emulsion, anti-microbial lotion may be applied in heat sensitive form in another aspect of the invention. In such cases, the transferable lotion disposed on the web includes an emollient, an anti-microbial agent, and a retention/release agent such that the lotion has a AH above about 37°C of more than 10 calories/gram, a total heat of melting of above about 25 calories/gram, and an onset of melting temperature of at least about 30°C. The lotion may further include a surfactant composition in the amount of from about 10 percent to about 15 percent by weight of the lotion composition. The surfactant may be selected from methyl glucoside sesquistearate, ethoxylated methyl glucoside sesquistearate containing 20 moles of oxyethylene units, or combinations thereof. A preferred surfactant is a mixture of PEG-20 methyl glucose sesquistearate (Glucamate SSE-20) and methyl glucose sesquistearate (Glucate SS). In connection with heat transferable lotions, the lotion composition may include an emollient in the amount of from about 5 percent to about 75 percent by weight of the lotion composition. The emollient may include an aromatic ester emollient, a fatty alcohol ester of a non-fatty organic acid emollient, or mixtures thereof. Suitable aromatic ester emollients include benzoate ester emollients, selected from $C_{12}$-$C_{15}$ alkyl benzoate, stearyl benzoate, octyl dodecyl benzoate, isostearyl benzoate, methyl gluceth-20 benzoate, stearyl ester benzoate, poloxamer 182 dibenzoate, poloxamer 105 benzoate, or mixtures thereof. Likewise, fatty alcohol esters of a non-fatty organic acid emollient include $C_{12}$-$C_{15}$ octanoate, for example. Heat sensitive lotions preferably include a retention/release agent in an amount of from about 25 percent to about 95 percent by weight of the lotion composition. Suitable retention/release agents include $C_{12}$-$C_{18}$ fatty alcohols. Fatty alcohols may be selected from dodecanol, tridecanol, tetradecanol, pentadecanol, hexadecanol, heptadecanol, octadecanol, or mixtures thereof. One preferred retention/release agent is a mixture of cetyl alcohol and stearyl alcohol. Here again, the lotion composition is preferably substantially waterless.

In another aspect of the invention, the transferable lotion composition disposed on the web is selected and applied to the web in amounts such that the lotion imparts a water absorption rate delay of at least about 25 percent. A water absorption rate delay of at least 50 percent is typical. There may be a water absorption rate delay of at least about 75 percent or 100 percent imparted to the cellulosic web as will be appreciated from the examples which follow.

While the products of the invention exhibit a substantial absorption rate delay, the SAT value of the lotioned product is substantially the same as the unlotioned cellulosic web from which the towel is made, being very slightly lower as is seen in the Examples. Generally, products of the invention have a SAT value of from about 3 g/g to about 5 g/g. A SAT value of at least about 3 g/g is preferred as are values of 3.5 g/g, 4 g/g, and 4.5 g/g in some embodiments.

The lotioned products of the invention generally exhibit a WAR value of at least about 40 seconds and in some cases at least about 50 seconds. Typical products have WAR values of from about 55 to about 75 seconds, but values up to about 100 seconds are likewise suitable as discussed previously. Values of 80-100 seconds were obtained for webs with large proportions of recycle fiber and lower basis weights while still providing desirable functionality.

The transferable lotion of the invention is generally applied to the cellulosic web in an amount of from about 3 percent to about 20 percent by weight, based on the combined weight of the dry web and the lotion. From about 5 percent by weight to about 15 percent by weight is typical and from about 8 percent by weight to about 10 percent by weight is preferred in some cases; while amounts from about 6 weight percent to about 8 weight percent lotion provide very good cost effectiveness.

The towel of the invention generally has a basis weight of about 15 to about 65 g/m$^2$; typically of from about 25 to about 50 g/m$^2$ and preferably from about 30 to about 40 g/m$^2$. As noted above, the towel is preferably made with fiber consisting predominantly of softwood fiber. Typically the web is greater than about 65 percent by weight softwood fiber and preferably at least about 70 percent by weight softwood fiber. Softwood fiber content of from about 70 to about 90 percent by weight based on the dry fiber in the furnish is generally preferred. An especially preferred softwood fiber is Douglas fir fiber. The anti-microbial sheet of the invention may be in the form of a single ply towel having an eight sheet caliper of from about 35 to about 90 mils (0.89 to about 2.29 mm).

In another aspect of the invention, there is provided an anti-microbial paper towel with an optional chromatic transfer indicator including: a) a cellulosic web; b) a transferable lotion composition comprising an emollient and anti-microbial agent, the lotion composition being immobilized on the cellulosic web in a semi-solid or solid form, wherein the transferable lotion composition is selected from lotion compositions which are transferable upon contact with water or lotion compositions which are transferable upon application of body heat and is applied to the towel at an add-on of from about 3 to about 20 weight percent; and c) a chromatic transfer indicator which fades after a characteristic time delay of at least about 5 seconds after contact with the water. Characteristic time delay of the transfer signal of a towel product of the invention is determined by placing a sample of towel on the surface of a bath of deionized water (or any source sufficient to saturate the sample) and recording the time delay between placing the towel on the bath (t = 0) and a visually observable color change (t=characteristic time delay). Time delay is expressed in seconds. In one preferred embodiment, the transfer indicator comprises a water-soluble polymer which may be selected from the group consisting of polyvinyl alcohol, starch, oxygenated hydrocarbons, polyacrylic acid, dextrin, and hydroxypropyl cellulose; alternatively, the transfer indicator comprises a surfactant. The towel may have an unlotioned basis weight generally of from about. 15 lbs. per 3000 square foot ream to about 45 lbs. per 3000 square foot ream (from about 24.4 gsm to about 73.2 gsm). An unlotioned basis weight of from about 20 lbs. per 3000 square foot ream to about 40 lbs. per 3000 square foot ream (from about 32.5 gsm to about 65.1 gsm) is more typical, with an unlotioned basis weight of from about 25 lbs. per 3000 square foot ream to about 35 lbs. per 3000 square foot ream (from about 40.7 gsm to about 57.0 gsm) being preferred in many cases. Although in other cases, suitable products can be formed from unlotioned sheets having basis weights as low as 9 lbs/3000 square foot ream (14.6 gsm), particularly if two-ply products are desired. For the case of high bulk base sheets such as those formed by through-air dried (TAD) processes, uncreped through-air dried (UCTAD) processes or fabric-crepe processes noted above, base sheet basis weights from 12-40 lbs/3000 square foot ream or 15-30 lbs/ 3000 square foot ream and 18-25 lbs/3000 square foot ream (from 19.5-65.1 gsm or 24.4-48.8 gsm and 29.3-40.7 gsm) are suitable. The transferable lotion is applied to the web at an add-on rate of from about 5 to about 15 weight percent, with from about 8 to about 10 weight percent being somewhat typical and 6-8 weight percent preferred for cost effectiveness.

When using a fabric creping process to make absorbent sheet for use in connection with the present invention, a creping adhesive is optionally used to secure the web to the transfer cylinder and is used to adhere the fabric creped web to the Yankee before it is peeled as is hereinafter described. The adhesive is preferably a hygroscopic, re-wettable, substantially non-crosslinking adhesive. Examples of preferred adhesives are those which include poly(vinyl alcohol) of the general class described in United States Patent No. 4,528,316 to Soerens et al. Other suitable adhesives are disclosed in co-pending United States Patent Application Serial No. 10/409,042, filed April 9, 2003 (Publication No. US 200510006040A1), entitled "Improved Creping Adhesive Modifier and Process for Producing Paper Products" (Attorney Docket No. 2394). The disclosures of the '316 patent and the'255 application are incorporated herein by reference. Suitable adhesives are optionally provided with modifiers and so forth. It is preferred to use a crosslinker and/or a modifier sparingly or not at all in the adhesive.

A nascent web is typically dewatered on a papermaking felt. Any suitable felt may be used. For example, felts can have double-layer base weaves, triple-layer base weaves, or laminated base weaves. Preferred felts are those having the laminated base weave design. A wet-press-felt which may be particularly useful with the present invention is Vector 3 made by Voith Fabric. Background art in the press felt area includes United States Patent Nos. 5,657,797; 5,368,696; 4,973,512; 5,023,132; 5,225,269; 5,182,164; 5,372,876; and 5,618,612. A differential pressing felt as is disclosed in United States Patent No. 4,533,437 to Curran et al. may likewise be utilized.

Suitable creping or textured fabrics include single layer or multi-layer, or composite preferably open meshed structures. Fabric construction *per se* is of less importance than the topography of the creping surface in the creping nip as discussed in more detail below. Long MD knuckles with slightly lowered CD knuckles are greatly preferred for some products. Fabrics may have at least one of the following characteristics: (1) on the side of the creping fabric that is in contact with the wet web (the "top" side), the number of machine direction (MD) strands per inch (mesh) is from 10 to 200 (3.9 to 79 strands per centimeter) and the number of cross-direction (CD) strands per inch (count) is also from 10 to 200 (3.9 to 79 strands per centimeter); (2) the strand diameter is typically smaller than 0.050 inch (1.27 mm); (3) on the top side, the distance between the highest point of the MD knuckles and the highest point on the CD knuckles is from about 0.001 to about 0.02 or 0.03 inch (from about 0.025 to about 0.51 or 0.76 mm); (4) in between these two levels there can be knuckles formed either by MD or CD strands that give the topography a three dimensional hill/valley appearance which is imparted to the sheet; (5) The fabric may be oriented in any suitable way so as to achieve the desired effect on processing and on properties in the product; the long warp knuckles may be on the top side to increase MD ridges in the product, or the long shute knuckles may be on the top side if more CD ridges are desired to influence creping characteristics as the web is transferred from the transfer cylinder to the creping fabric; and (6) the fabric may be made to show certain geometric patterns that are pleasing to the eye, which is typically repeated between every two to 50 warp yarns. One preferred fabric is a W013 Albany International multilayer fabric. Such fabrics are formed from monofilament polymeric fibers having diameters typically ranging from about 0.25 mm to about 1 mm. This fabric may be used to produce an absorbent cellulosic sheet having variable local basis weight comprising a papermaking fiber reticulum provided with (i) a plurality of cross-machine direction (CD) extending, fiber-enriched pileated regions of relatively high local basis weight interconnected by (ii) a plurality of elongated densified regions of compressed papermaking fibers, the elongated densified regions having relatively low local basis weight and are generally oriented along the machine direction (MD) of the sheet. The elongated densified regions are further characterized by an MD/CD aspect ratio of at least 1.5. Typically, the MD/CD aspect ratios of the densified regions are greater than 2 or greater than 3; generally between about 2 and 10. In most cases the fiber-enriched, pileated regions have fiber orientation bias along the CD of the sheet and the densified regions of relatively low basis weight extend in the machine direction and also have fiber orientation bias along the CD of the sheet. This product is further described in copending application United States Application Serial No. 11/804,246 filed May 16, 2007, entitled "Fabric Creped Absorbent Sheet with Variable Local Basis Weight" (Attorney Docket No. 20179; GP-06-11), the disclosure of which is incorporated herein in its entirety by reference.

The creping fabric may thus be of the class described in United States Patent No. 5,607,551 to Farrington et al., Cols. 7-8 thereof, as well as the fabrics described in United States Patent No. 4,239,065 to Trokhan and United States Patent No. 3,974,025 to Ayers. Such fabrics may have about 20 to about 60 filaments per inch (about 8 to about 24 filaments per centimeter) and are formed from monofilament polymeric fibers having diameters typically ranging from about 0.008 to about 0.025 inches (about 0.20 to about 0.64 mm). Both warp and weft monofilaments may, but need not necessarily be of the same diameter. In some cases, the filaments are so woven and complimentarily serpentinely configured in at least the Z-direction (the thickness of the fabric) to provide a first grouping or array of coplanar top-surface-plane crossovers of both sets of filaments and a predetermined second grouping or array of sub-top-surface crossovers. The arrays are interspersed so that portions of the top-surface-plane crossovers define an array of wicker-basket-like cavities in the top surface of the fabric, which cavities are disposed in staggered relation in both the machine direction (MD) and the cross-machine direction (CD), and so that each cavity spans at least one sub-top-surface crossover. The cavities are discretely perimetrically enclosed in the plan view by a picket-like-lineament comprising portions of a plurality of the top-surface plane crossovers. The loop of fabric may comprise heat set monofilaments of thermoplastic material; the top surfaces of the coplanar top-surface-plane crossovers may be monoplanar flat surfaces. Specific embodiments of the invention include satin weaves as well as hybrid weaves of three or greater sheds, and mesh counts of from about 10 X 10 to about 120 X 120 filaments per inch (4 X 4 to about 47 X 47 per centimeter), although the preferred range of mesh counts is from about 18 by 16 to about 55 by 48 filaments per inch (9 X 8 to about 22 X 19 per centimeter).

Instead of an impression fabric, a dryer fabric may be used as the creping fabric if so desired. Suitable fabrics are described in United States Patent Nos. 5,44.9,026 (woven style) and 5,690,149 (stacked MD tape yam style) to *Lee*, as well as United States Patent No. 4,490,925 to Smith (spiral style).

If a Fourdrinier former or other gap former is used, the nascent web may be conditioned with suction boxes and a steam shroud until it reaches a solids content suitable for transferring to a dewatering felt. The nascent web may be transferred with suction assistance to the felt. In a crescent former, use of suction assist is unnecessary as the nascent web is formed between the forming fabric and the felt.

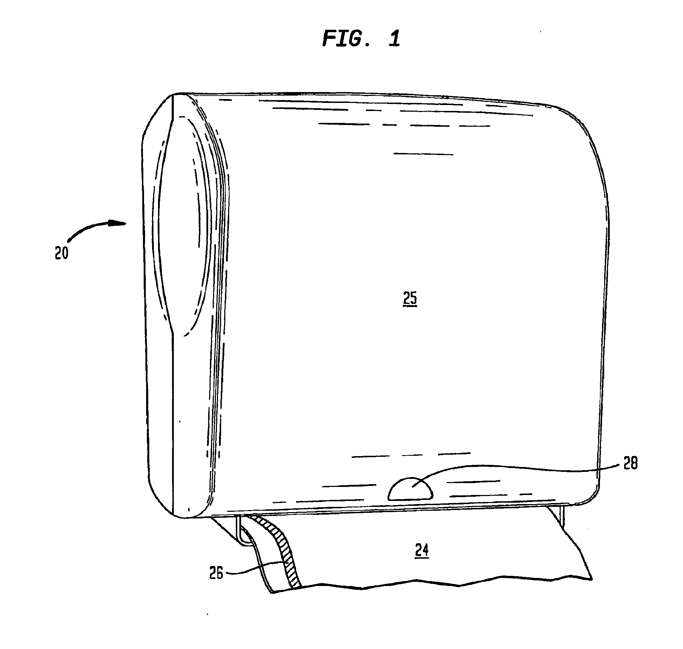

Referring to the appended drawings, there is shown in **Figure 1** an automatic touchless dispenser **20** provided with lotioned towel **24** of the invention inside of a housing **25**. Towel **24** may include a stripe **26,** such as a green MD stripe to indicate its anti-microbial and lotion features. Dispenser **20** includes a proximity sensing element **28** which generates a touchless proximity signal upon nearness of a consumer. The dispenser dispenses towel in response to the proximity signal. Dispenser **20** is available from Georgia-Pacific Corporation (Atlanta) and is sold under the name enMotion®. Suitable dispensers are further described in the following patents, the disclosures of which are incorporated herein by reference: United States Patent No. 6,871,815, to Moody et al.; United States Patent No. 6,838,887 to Denen et al.; United States Patent No. 6,793,170 to Denen et al.; United States Patent No. 6,766,977 to Denen et al; United States Patent No. 6,592,067 to Denen et al; United States Patent No. 6,412,678 to Gracyalny et al.; and United States Patent No. 6,321,963 to Gracyalny et al.

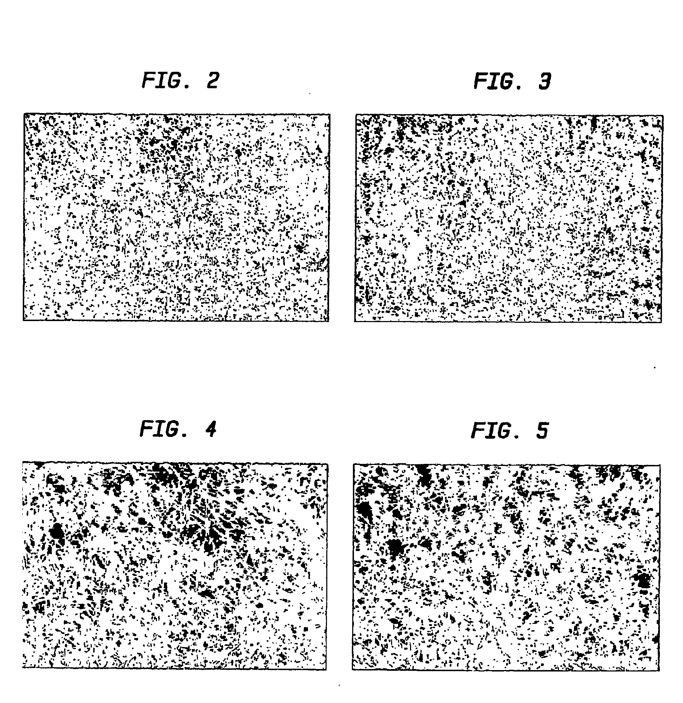

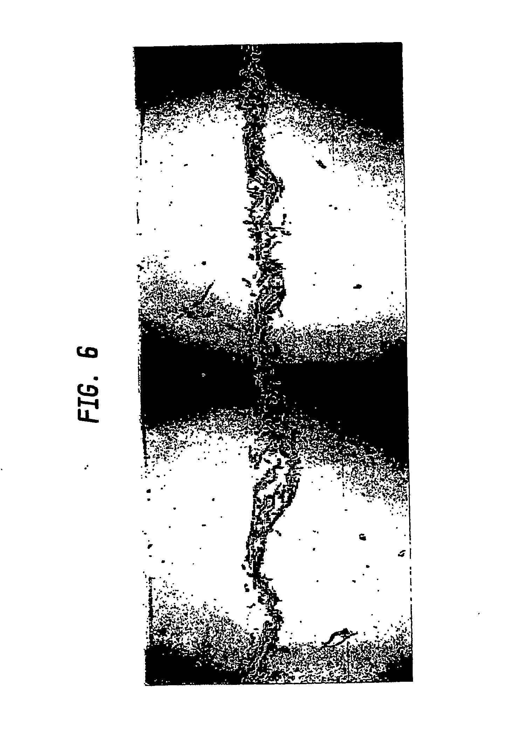

It will be appreciated from **Figures 2** through **11** that the fabric creped, peeled product resembles uncreped throughdried sheet. There is shown in **Figures 2** through **6** photomicrographs of a throughdried, uncreped product; in this respect **Figure 2** is a photomicrograph (10X) of the top side of the sheet; **Figure 3** is a photomicrograph (10X) of the back side of the sheet; **Figure 4** is a photomicrograph (25X) of the top side of the sheet; and **Figure 5** is a photomicrograph (25X) of the back of the side of the throughdried sheet. **Figure 6** is a cross-sectional view (cut along the machine direction, 62.5X) which shows that the sheet is substantially without crepe bars inasmuch as this throughdried sheet has not been dry-creped.

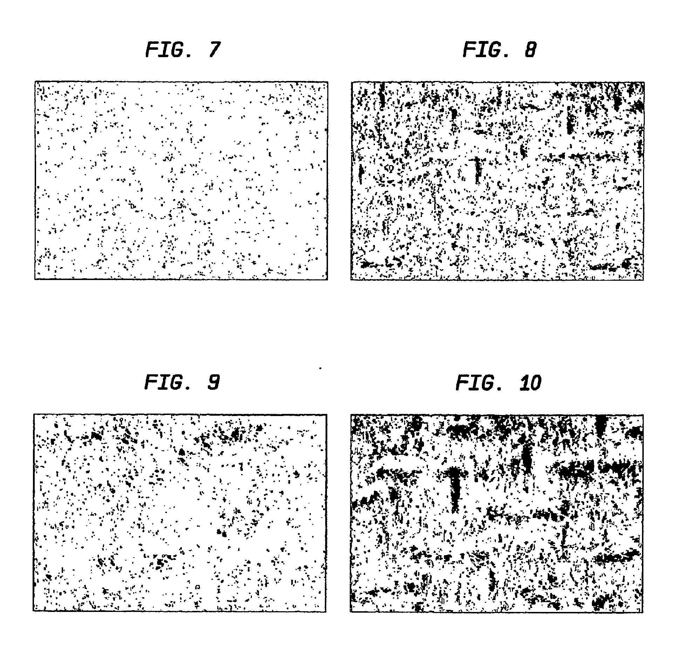

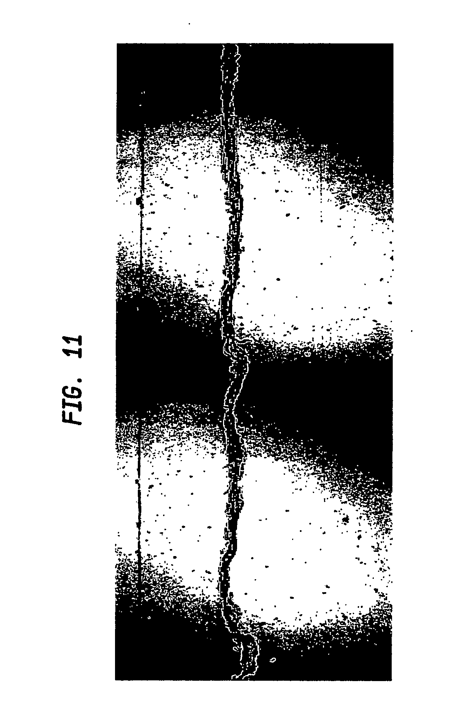

**Figures 7** through **11** are photomicrographs of a fabric creped sheet which was creped at a 7% fabric crepe and peeled from a Yankee dryer as described below. **Figure 7** is a top side view (10X) of the sheet, while **Figure 8** is a back side view (10X) of the sheet; **Figure 9** is a top side view (25X) of the sheet while **Figure 10** is a back side view (25X) of the sheet; and **Figure 11** is a cross sectional view along the machine direction of the sheet at a magnification of 62.5X.

It can be seen in **Figures 7** through **11** that the sheet has a good distribution of fiber and that the sheet is substantially without crepe bars of the type which occur when a product is dry-creped from a Yankee cylinder. It is further noted with respect to **Figures 7 through 11** that the back side of the sheet bears the pattern of the creping fabric used to produce the sheet. Thus, if so desired, the sheet may be made more or less "sided". Alternatively, the sheet may be calendered to reduce sidedness as noted above. Here again, it is seen there **is** a substantial absence of crepe bars in the web.

It is also seen in **Figures 7** through **11** that the fabric creped sheet has a structure which is somewhat undulatory in the machine direction allowing for stretch as will be appreciated from the examples hereinafter provided.

A preferred method of making the fabric-creped web of **Figures 7-11** is to start with a furnish that includes a polyacrylamide (i.e., Parez) at 6-11 lbs/ton (3-10.5 kg/mton) along with a PAE resin at about 11 lbs/ton (10.5 kg/mton) and operate the Yankee in a dry, blade-crepe mode with PVOH creping adhesive, creping the web from the cylinder for half an hour to forty-five minutes or so while an adhesive coating builds up on the Yankee. Thereafter, the acrylamide is no longer used in the furnish and carboxymethyl cellulose is used instead at 2-6 lbs/ton (1-3 kg/mton) of fiber while the web is peeled from the Yankee as described below. Alternatively, if the desired product properties do not require a dry strength agent, start-up may be accomplished without using any dry strength agent.

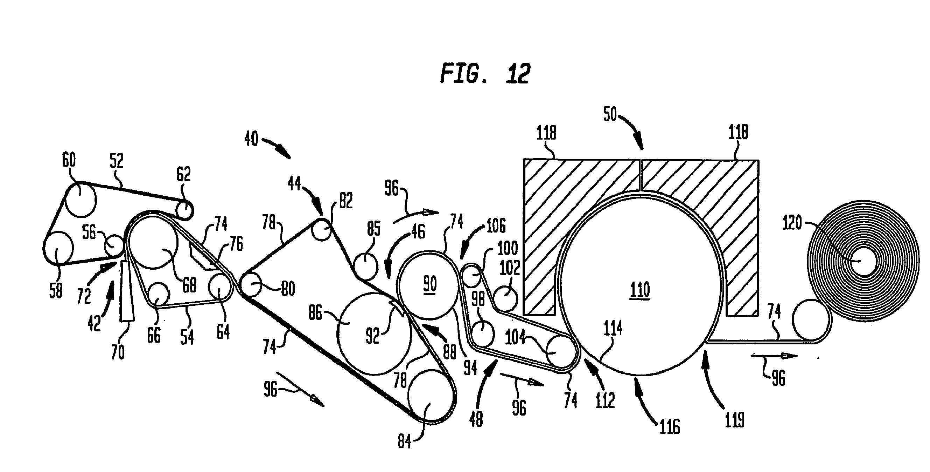

**Figure 12** is a schematic diagram of a papermachine **40** having a conventional twin wire forming section **42,** a felt run **44,** a shoe press section **46,** a creping fabric **48,** and a Yankee dryer **50** suitable for producing a fabric-creped web. Forming section **42** includes a pair of forming fabrics **52, 54** supported by a plurality of rolls **56, 58, 60, 62, 64, 66** and a forming roll **68.** A headbox **70** provides papermaking furnish issuing therefrom as a jet in the machine direction to a nip **72** between forming roll **68** and roll **56** and the fabrics. The furnish forms a nascent web **74** which is dewatered on the fabrics with the assistance of suction, for example, by way of suction box **76.**

The nascent web is advanced to a papermaking felt **78** which is supported by a plurality of rolls **80, 82, 84, 85** and the felt is in contact with a shoe press roll **86.** The web is of low consistency as it is transferred to the felt. Transfer may be assisted by suction; for example roll **80** may be a suction roll if so desired or a pickup or suction shoe as is known in the art. As the web reaches the shoe press roll, it may have a consistency of 10-25 percent, preferably 20 to 25 percent or so, as it enters nip **88** between shoe press roll **86** and transfer roll **90.** Transfer roll **90** may be a heated roll if so desired. Instead of a shoe press roll, roll **86** could be a conventional suction pressure roll. If a shoe press is employed, it is desirable and preferred that roll **84** is a suction roll effective to remove water from the felt prior to the felt entering the shoe press nip since water from the furnish will be pressed into the felt in the shoe press nip. In any case, using a suction roll at **84** is typically desirable to ensure the web remains in contact with the felt during the direction change as one of skill in the art will appreciate from the diagram.

Web **74** is wet-pressed on the felt in nip **88** with the assistance of pressure shoe **92.** The web is thus compactively dewatered at **88,** typically by increasing the consistency by 15 or more points at this stage of the process. The configuration shown at **88** is generally termed a shoe press; in connection with the present invention, cylinder **90** is operative as a transfer cylinder which operates to convey web **74** at high speed, typically 1000 fpm-6000 fpm (305-1830 m/min), to the creping fabric.

Cylinder **90** has a smooth surface **94** which may be provided with adhesive and/or release agents if needed. Web **74** is adhered to transfer surface **94** of cylinder **90** which is rotating at a high angular velocity as the web continues to advance in the machine-direction indicated by arrows **96.** On the cylinder, web **74** has a generally random apparent distribution of fiber.

Direction **96** is referred to as the machine-direction (MD) of the web as well as that of papermachine **40;** whereas the cross-machine-direction (CD) is the direction in the plane of the web perpendicular to the MD.

Web **74** enters nip **88** typically at consistencies of 10-25 percent or so and is dewatered and dried to consistencies of from about 30 to about 70 by the time it is transferred to creping fabric **48** as shown in the diagram.

Fabric **48** is supported on a plurality of rolls **98,100,102** and a press nip roll **104,** and forms a fabric crepe nip **106** with transfer cylinder **90** as shown.

The creping fabric defines a creping nip over the distance in which creping fabric **48** is adapted to contact roll **90;** that is, applies significant pressure to the web against the transfer cylinder. To this end, backing (or creping) roll **100** may be provided with a soft deformable surface which will increase the length of the creping nip and increase the fabric creping angle between the fabric and the sheet and the point of contact, or a shoe press roll could be used as roll **100** to increase effective contact with the web in high impact fabric creping nip **106,** where web **74** is transferred to fabric **48** and advanced in the machine-direction.

Creping nip **106** generally extends over a fabric creping width (MD distance) of anywhere from about 1/8" to about 2" (about 0.32 to about 5.08 cm), typically ½" to 2" (about 1.27 to about 5.08 cm). For a creping fabric with 32 CD strands per inch (12.5 CD strands per cm), web **74** thus will encounter anywhere from about 4 to 64 weft filaments in the nip.

The nip pressure in nip **106,** that is, the loading between backing roll **100** and transfer roll **90,** is suitably 20-200 (3.6-35.7 plcm), preferably 40-70 pounds per linear inch (PLI) (7.1-12.5 plcm).

After fabric creping, the web continues to advance along NB7 **96** where it is wet-pressed onto Yankee cylinder **110** in transfer nip **112.** Transfer at nip **112** occurs at a web consistency of generally from about 25 to about 70 percent. At these consistencies, it is difficult to adhere the web to surface **114** of cylinder **110** firmly enough to remove the web from the fabric thoroughly. This aspect of the process is important, particularly when it is desired to use a high velocity drying hood.

It has been found that the use of particular adhesives cooperate with a moderately moist web (25-70 percent consistency) to adhere it to the Yankee sufficiently to allow for high velocity operation of the system and high jet velocity impingement air drying and subsequent peeling of the web from the Yankee. In this connection, a poly(vinyl alcohol)/ polyamide adhesive composition as noted above is applied at **116** as needed, preferably at a rate of less than about 40mg/m$^2$ of sheet.

The web is dried on Yankee cylinder **110** which is a heated cylinder, and by high jet velocity impingement air in Yankee hood **118.** As the cylinder rotates, web **74** is peeled from the cylinder at **119** and wound on a take-up reel **120.**

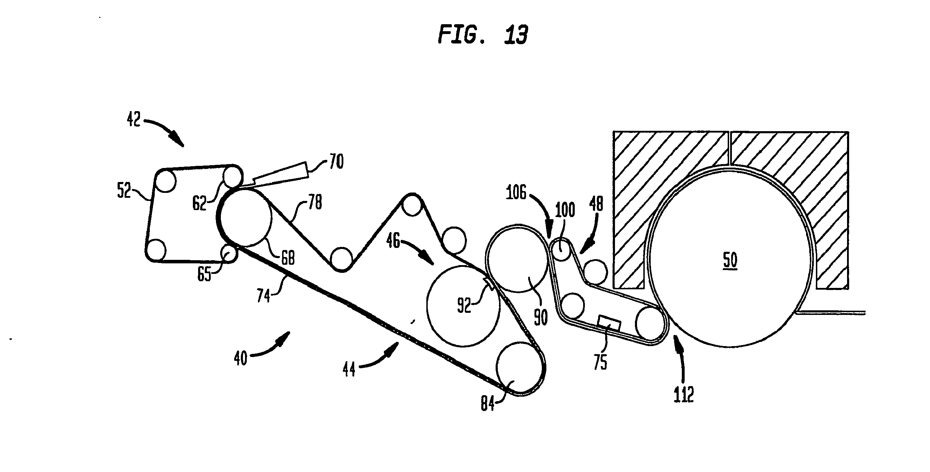

There is shown in **Figure 13** a preferred papermachine **40** for use in connection with the present invention. Papermachine **40** is a three fabric loop machine having a forming section **42** generally referred to in the art as a crescent former. Forrning section **42** includes a forming wire **52** supported by a plurality of rolls such as rolls **62, 65.** The forming section also includes a forming roll **68** which supports paper making felt **78** such that web **74** is formed directly on felt **78.** Felt run **44** extends to a shoe press section **46** wherein the moist web is deposited on a transfer roll **90** as described above. Thereafter web **74** is creped onto fabric in fabric crepe nip between rolls **90, 100** before being deposited on Yankee dryer in another press nip **112.** Suction is optionally applied by suction box **75** as the web is held in fabric. Headbox **70** and press shoe **92** operate as noted above in connection with **Figure 12.** The system includes a suction turning roll **84,** in some embodiments; however, the three loop system may be configured in a variety of ways wherein a turning roll is not necessary.

Any suitable line arrangement may be used downstream of the Yankee dryer between the Yankee dryer and take up reel. Preferably, any open draw is provided with some form of stabilizing airfoil and there are provided tensioners so as to prevent wrinkling of the sheet.

Examples

Following the procedures and using the materials noted above, a series of absorbent base sheets were prepared and tested for dispensing performance in automatic dispensers. Details and results appear in Tables 3-6 below.

Table 3 - Towel Composition and Properties

| Roll ID | HS-FCT | E0222 133 | E0220 133 | E0219 133 | E1228 100 | E1227 100 | E1834 133 | 5E183 2133 | E2635 100 | E2639 100 (CAL) | F0230 133 (CAL) | F0236 133 (CAL) | 02431 33/100 (CAL) |
|---|---|---|---|---|---|---|---|---|---|---|---|---|---|
| MODE | Creped | Peeled | Peeled | Peeled | Peeled | Peeled | Peeled | Peeled | peeled | Peeled | Peeled | Peeled | Peeled |
| Fabric Crepe% | 12% | 7% | 10% | 15% | 7% | 10% | 7% | 10% | 7% | 7% | 7% | 5% | 5% |
| PVOH/PAE (mg/m^2) | 54 | 25 | 25 | 25 | 21 | 21 | 18 | 18 | 20 | 20 | 20 | 20 | 20 |
| Modifier (ml/min) | 500 | 20 | 20 | 20 | 75 | 75 | 22 | 22 | 50 | 50 | 20 | 20 | 20 |
| Leaf River SWK% | | | | | | | | | | | | | |
| Camas B16 SWK% | | | | | 100% | 100% | | | 100% | 100% | 100% | 100% | 100% |
| Peace River SWK% | 60% | 80% | 80% | 80% | | | 100% | 100% | | | | | |
| Fox River 2nd Fiber% | 40% | 20% | 20% | 20% | | | | | | | | | |
| WSR (#/T) | 11 | 11 | 11 | 11 | 12 | 12 | 10 | 10 | 11 | 14 | 14 | 14 | 15 |
| Parez 631 (#/T) | 11 | 14 | 14 | 14 | 13 | 13 | 11 | 11 | 12 | 12 | 11 | 11 | 0 |
| CMC(#/T) | | | | | | | | | | | | | 5 |
| Refining (hp) | 80% | 80% | 80% | 80% | 80% | 80% | 80% | 80% | By Pass | By Pass | By Pass | By Pass | By Pass |
| MODE | Creped | Peeled | Peeled | Peeled | Peeled | Peeled | Peeled | Peeled | Peeled | Peeled | Peeled | Peeled | Peeled |
| Yankee Steam psi | 110 (7.6) | 80 (5.5) | 80 (5.5) | 80 (5.5) | 80 (5.5) | 80 (5.5) | 80 (5.5) | 80 (5.5) | 80 (5-5) | 80 (5.5) | 80 (5.5) | 80 (5.5) | 80 (5.5) |

| MODE | Creped | Peeled | Peeled | Peeled | Peeled | Peeled | Peeled | Peeled | Peeled | Peeled | Peeled | Peeled | Peeled |
|---|---|---|---|---|---|---|---|---|---|---|---|---|---|
| **(Bar)** | | | | | | | | | | | | | |
| **Basis Weight lbs/rm (gsm)** | 23.4 (38.1) | 23.6 (38.4) | 23.5 (382) | 22.6 (36.8) | 22.9 (37.3) | 22.6 (36.8) | 23.1 (37.6) | 22.6 (36.8) | 23.3 (37.9) | 23.0 (37.4) | 22.9 (37.3) | 22.9 (37.3) | 23.2 (38.6) |
| **Caliper mils/8 sheets (mm/8 sheets)** | 55.0 (1.40) | 50.2 (1.28) | 51.9 (1.32) | 53.6 (1.36) | 57.0 (1.45) | 61.0 (1.55) | 58.0 (1.47) | 64.6 (1.64) | 55.1 (1.40) | 53.3 (1.35) | 53.3 (1.35) | 50.6 (1.29) | 52.8 (1.34) |
| **Dry MD Tensile g/3" (g/cm)** | 5258 (690) | 8177 (1073) | 6350 (833) | 5331 (700) | 6821 (895) | 5831 (765) | 6454 (847) | 5382 (706) | 5761 (756) | 5482 (719) | 5504 (722) | 5205 (683) | 6169 (810) |
| **Dry CD Tensile g/3" (g/cm)** | 3594 (472) | 4282 (562) | 4739 (622) | 3558 (467) | 4044 (531) | 4294 (564) | 3939 (517) | 3235 (425) | 3910 (513) | 3758 (493) | 3422 (449) | 3134 (411) | 3388 (445) |
| **MD Stretch (%)** | 12 | 9 | 10 | 14 | 10 | 12 | 9 | 12 | 8 | 8 | 8 | 7 | 7 |
| **Roll ID** | HS-FCT | E0222 133 | E0220 133 | E0219 133 | E1228 100 | E1227 100 | E1834 133 | 5E183 1133 | E2635 100 | E2639 100 (CAL) | F0230 133 (CAL) | F0236 133 (CAL) | 02431 33/100 (CAL) |
| **MODE** | Creped | Peeled | Peeled | Peeled | Peeled | Peeled | Peeled | Peeled | Peeled | Peeled | Peeled | Peeled | Peeled |
| **CD Stretch (%)** | 3 | 2 | 3 | 3 | 3 | 3 | 3 | 3 | 3 | 3 | 3 | 3 | 3 |
| **Wet MD Cured Tensile g/3¹' (Finch)** | | 2125 {279} | 1329 {174} | 1570 {206} | 1634 {214} | 1484 {195} | 1584 {208} | 1506 {198} | 1426 {187} | 1255 {165} | 1500 {197} | 996 {131} | 1691 {222} |

| Roll ID | HS-FCT | E0222 133 | E0220 133 | E0219 133 | E1228 100 | E1227 100 | E1834 133 | 5E183 1133 | E2635 100 | E2639 100 (CAL) | F0230 133 (CAL) | F0236 133 (CAL) | 02431 33/100 (CAL) |
|---|---|---|---|---|---|---|---|---|---|---|---|---|---|
| MODE | Creped | Peeled | Peeled | Peeled | Peeled | Peeled | Peeled | Peeled | Peeled | Peeled | Peeled | Peeled | Peeled |
| {g/cm} | | | | | | | | | | | | | |
| Wet CD Cured Tensile (g/ 3") (Finch) | 861 {113} | 1061 {139} | 835 {110} | 881 {116} | 889 {117} | 1040 {136} | 917 {120} | 772 {101} | 932 {122} | 775 {102} | 998 {131} | 688 {90.3} | 970 {127} |
| WAR (seconds) (TAPPI) | 15 | 35 | 39 | 25 | 30 | 31 | 24 | 21 | 33 | 23 | 27 | 22 | 13 |
| Slow SAT (g/g) | 3.23 | 3.24 | 4.18 | 5.35 | 3.09 | 3.04 | 3.95 | 4.28 | 3.57 | 4.88 | 4.59 | 3.79 | 5.36 |
| GM Break Modulus (g/cm/ %strain) | 712 (93.4) | 1265 (166) | 1048 (138) | 700 (91.9) | 934 (123) | 798 (105) | 934 (123) | 697 (91.5) | 1002 (132) | 956 (125) | 881 (116) | 922 (121) | 971 (127) |
| Dry Tensile Ratio | 1.46 | 1.91 | 1.34 | 1.50 | 1.69 | 1.36 | 1.64 | 1.66 | 1.47 | 1.46 | 1.61 | 1.66 | 1.82 |
| CD Wet/Dry | 24% | 25% | 18% | 25% | 22% | 24% | 23% | 24% | 24% | 21% | 29% | 22% | 29% |
| Total Dust mg/ft^2) (mg/cm^2) | 3.62 (3360) | 1.85 (1720) | 0.72 (669) | 0.83 (771) | 0.34 (316) | 0.18 (167) | 1.03 (957) | 1.26 (1070) | 038 (353) | 0.30 (279) | 0.80 (743) | 1.02 (948) | 0.75 (697) |
| Bending Length (cm) | 2.63 | 4.16 | 4.00 | 3.43 | 4.12 | 4.00 | 3.71 | 3.44 | 3.93 | 3.86 | 3.74 | 3.80 | 4.09 |

Table 4 - Dispensing Test for Towel

| Roll ID | HS-FCT | E0222 133 | E0220 133 | E0219 133 | E1228 100 | E1227 100 | E1834 133 | E1832 133 | E2635 100 | E2639 100 (CAL) | F0230 133 (CAL) | F0236 133 (CAL) | F0243 133/100 (CAL) |
|---|---|---|---|---|---|---|---|---|---|---|---|---|---|
| MODE | Creped | Peeled | Peeled | Peeled | Peeled | Peeled | Peeled | Peeled | Peeled | Peeled | Peeled | Peeled | Peeled |
| #Rolls Dispensed | 55 | 10 | 10 | 10 | 10 | 10 | 10 | 10 | 10 | 10 | 10 | 10 20 | |
| Estimate #PuUs | 44000 | 8000 | 8000 | 8000 | 8000 | 8000 | 8000 | 8000 | 8000 | 8000 | 8000 | 8000 | 16000 |
| Dispensing Defect - Partial Bunch | 98 | 4 | 1 | 4 | 0 | 1 | 2 | 0 | 2 | 0 | 1 | 1 | 2 |
| Dispensing Defect - Whole Bunch | 10 | 0 | 0 | 0 | 0 | 0 | 0 | 1 | 1 | 0 | 0 | 0 | 0 |
| Dispensing Defect - Hanging Loop | 1 | 0 | 0 | 0 | 0 | 0 | 0 | 0 | 0 | 0 | 0 | 0 | 0 |
| # Dispensing Defects per Roll | 1.98 | 0.40 | 0.10 | 0.40 | 0.00 | 0.10 | 0.20 | 0.10 | 0.30 | 0.00 | 0.10 | 0.10 | 0.10 |
| # Rolls Have Dispensing Defects | 32 | 1 | 1 | 3 | 0 | 1 | 2 | 1 | 1 | 0 | 1 | 1 | 2 |
| % Roll Having Dispensing Defects | 58% | 10% | 10% | 30% | 0% | 10% | 20% | 10% | 10% | 0% | 10% | 10% | 10% |

Table 5 - Towel Composition and Properties

| Roll ID | 100% Marathon (NSW) | | | | 100% Leaf River (SSW) | | 100% Douglas fir | |
|---|---|---|---|---|---|---|---|---|
| | 7784 | 8226 | 7761 | 8229 | 7752 | 8197 | 8212 | 8214 |
| MODE | Creped | Peeled | Creped | Peeled | Creped | Peeled | Peeled | Peeled |
| Fabric Crepe% | 7% | 7% | 10% | 10% | 3% | 7% | 7% | 10% |
| PVOH (#/T) | 3.50 | 1.10 | 3.50 | 1.10 | 3.50 | 0.37 | 1.10 | 1.10 |
| PAE (#/T) | 1 | 0.37 | 1 | 0.37 | 1 | 0.13 | 0.37 | 0.37 |
| Modifier (#T) | 2 | 0.00 | 2 | 0.00 | 2 | 0.00 | 0.00 | 0.00 |
| SWK% | 100 | 100 | 100 | 100 | 100 | 100 | 100 | 100 |
| WSR(#/T) | 22 | 7 | 22 | 7 | 20 | 20 | 15 | 12 |
| Parez 631 (#/T) | 3 | | 3 | | 6 | | | |
| CMC(#/T) | 0 | 0 | 0 | 0 | | 6 | 6 | 5 |
| Basis Weight 1bs/rm (gsm) | 24.3 (39.5) | 22.4 (36.5) | 23.7 (38.6) | 22.5 (36.6) | 23.9 (38.9) | 22.4 (36.5) | 22.9 (37.3) | 22.9 (37.3) |
| Caliper mils/8 sheets (mm/8 sheets) | 50.7 (1.29) | 51.2 (1.30) | 56.3 (1.43) | 54.5 (1.38) | 49.8 (1.26) | 47.1 (1.20) | 52.3 (1.33) | 58.1 (1.48) |
| Dry MD Tensile g/3" (g/cm) | 7854 (1030) | 7330 (962) | 9758 (1281) | 6886 (904) | 8093 (1062) | 6439 (845) | 6562 (861) | 5809 (762) |
| Dry CD Tensile g/3" (g/cm) | 5481 (719) | 4820 (633) | 5376 (706) | 4788 (628) | 5565 (730) | 4483 (588) | 4825 (633) | 4455 (585) |
| MD Stretch (%) | 13 | 9 | 18 | 11 | 10 | 9 | 9 | 11 |
| CD Stretch (%) | 5 | 4 | 5 | 4 | 4 | 5 | 4 | 4 |
| Wet MD Cured Tensile g/3"(Finch) {g/cm} | 2371 {311} | 2220 {291} | 2645 {347} | 2018 {265} | 2198 {288} | 2138 {281} | 1964 {258} | 1682 {221} |
| Wet CD Cured Tensile (g/3") (Finch) | 1416 {186} | 1186 {156} | 1229 {161} | 1226 {161} | 1338 {176} | 1306 {171} | 1191 {156} | 1091 {143} |
| WAR (seconds) (TAPPI) | 6 | 16 | 13 | 13 | 45 | 14 | 21 | 15 |
| Slow SAT Capacity (g/m^2) | 140 | 136 | 132 | 184 | 104 | 178 | 165 | 132 |
| GM Break Modulus (g/cm/%strain) | 802 (105) | 1046 (137) | 748 (97.9) | 919 (120). | 1011 (132) | 810 (106) | 1008 (132) | 773 (101) |
| ASTM Bending Length (cm) | 2.7 | 3.5 | 2.5 | 3.3 | 2.7 | 3.5 | 3.9 | 3.2 |

Table 6 - Dispensing Test for Towel

| Roll ID | 100% Marathon (NSW) | | 100% Leaf River (SSW) | | | | 100% Douglas fir | |
|---|---|---|---|---|---|---|---|---|
| | 7784 | 8226 | 7761 | 8229 | 7752 | 8197 | 8212 | 8214 |
| MODE | Creped | Peeled | Creped | Peeled | Creped | Peeled | Peeled | Peeled |
| #Rolls Dispensed | 6 | 6 | 6 | 6 | 6 | 6 | 6 | 6 |
| Partial Bunch | 15 | 0 | 11 | 3 | 1 | 1 | 1 | 1 |
| Whole Bunch | 0 | 1 | 0 | 1 | 0 | 0 | 0 | 0 |
| Hanging Loop | 0 | 1 | 0 | 0 | 0 | 0 | 0 | 0 |
| Wrapped around pinch roller | 0 | 0 | 1 | 0 | 0 | 0 | 0 | 0 |
| % Dispensing Defect per roll | 2.5% | 0.33% | 2.0% | 0.67% | 0.17% | 0.17% | 0.17% | 0.17% |
| # Rolls Have Defects | 5 | 2 | 3 | 3 | 1 | 1 | 1 | 1 |
| % Roll Having Dispensing Defects | 83% | 33% | 50% | 50% | 17% | 17% | 17% | 17% |

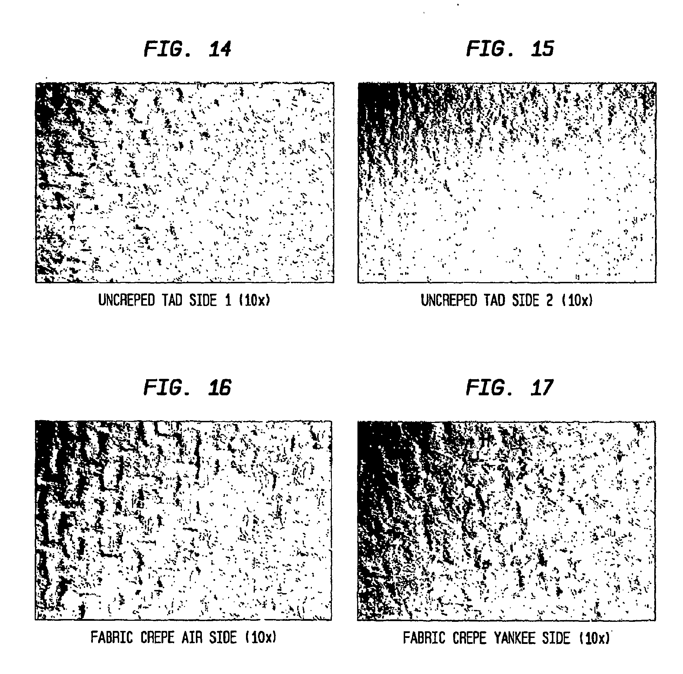

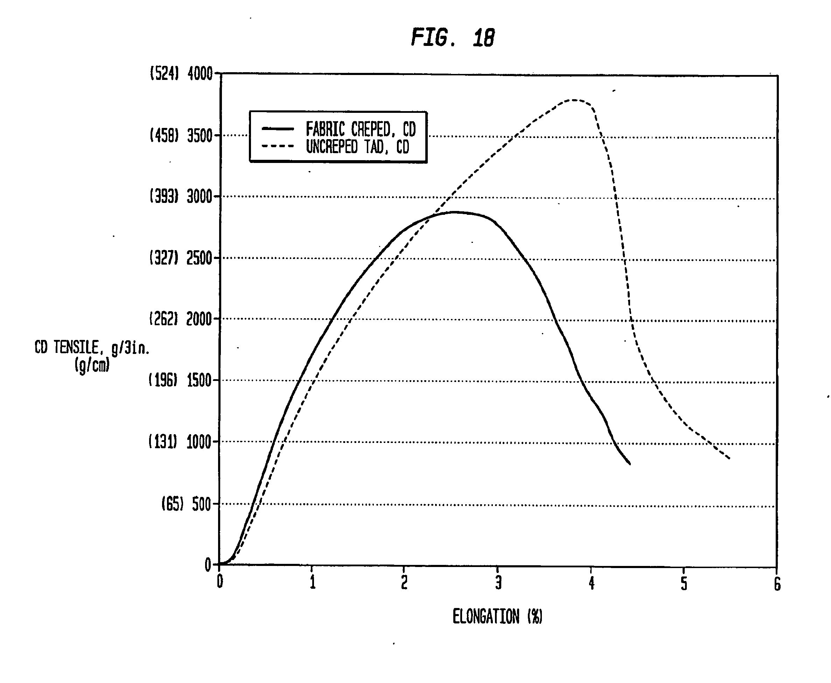

It will be appreciated from Tables 3 to 6 that the fabric creped, peeled product exhibited a large increase in MD bending length with respect to the fabric creped, dry creped product. Moreover, the dispensing testing shows that the product was dramatically superior for dispensing in automatic towel dispensers. The present invention is further appreciated by reference to **Figures 14-17.** In **Figures 14, 15,** there is shown uncreped throughdried sheet, whereas in **Figures 16,17** there is shown the absorbent sheet of the invention. Tensile characteristics are compared in **Figures 18,19.** It is seen from **Figure 19** that the fabric creped sheet has considerably more MD elongation or stretch prior to yield.

Utilizing the above procedures, additional "peeled" towel products were prepared utilizing the W013 fabric referred to above and compared with other products. Process parameters and product attributes are in Tables 7, 8 and 9, below.

Table 7 - Single-Ply Towel Sheet

| Roll ID | 11429 | 11418 | 11441 | 11405 | 11137 |
|---|---|---|---|---|---|
| NSWK | 100% | 50% | 100% | 50% | |
| Recycled Fiber | | 50% | | 50% | 100% |
| %Fabric Crepe | 5% | 5% | 5% | 5% | 5% |
| Suction (Hg) | 23 | 23 | 23 | 23 | 23 |
| WSR (#/T) | 12 | 12 | 12 | 12 | 12 |
| CMC (#/T) | 3 | 1 | 2 | 1 | 1 |
| Parez 631 (#/T) | 9 | 6 | 9 | 3 | 0 |
| PVOH (#/T) | 0.75 | 0.75 | 0.75 | 0.75 | 0.45 |
| PAE (#/T) | 0.25 | 0.25 | 0.25 | 0.25 | 0.15 |
| Modifier (#/T) | 0.25 | 0.25 | 0.25 | 0.25 | 0.15 |
| Yankee Speed fpm (m/min) | 1599 (487.7) | 1768 (539.2) | 1599 (487.7) | 1598 (487.4) | 1598 (487.4) |
| Reel Speed fpm (m/min) | 1609 (490.7) | 1781 (543.2) | 1609 (490.7) | 1612 (491.7) | 1605 (489.5) |
| Basis Weight 1bs/rm (gsm) | 18.4 (29.9) | 18.8 (30.6) | 21.1 (34.3) | 21.0 (34.2) | 20.3 (33.0) |
| Caliper mils/8 sheets | 41 | 44 | 44 | 45 | 44 |

(continued)

| Roll ID | 11429 | 11418 | 11441 | 11405 | 11137 |
|---|---|---|---|---|---|
| (mm/8 sheets) | (1.04) | (1.11) | (1.11) | (1.14) | (1.11) |
| Dry MD Tensile g/3" (g/cm) | 4861 (638.0) | 5517 (724.1) | 6392 (838.9) | 6147 (806.8) | 7792 (1023) |
| Dry CD Tensile g/3" (g/cm) | 3333 (437.4) | 3983 (522.8) | 3743 (491.3) | 3707 (486.5) | 4359 (572.1) |
| GMT g/3" (g/cm) | 4025 (528.3) | 4688 (615.3) | 4891 | 4773 | 5828 (764.9) |
| MD Stretch (%) | 6.9 | 6.6 | 7.2 | 6.2 | 6.4 |
| CD Stretch (%) | 5.0 | 5.0 | 4.8 | 5.0 | 4.9 |
| Wet MD Cured Tensile g/3" (Finch) {g/cm} | 1441 {189.1} | 1447 {189.9} | 1644 {215.8} | 1571 {206.2} | 2791 {366.3} |
| Wet CD Cured Tensile g/3" (Finch) {g/cm} | 1074 {141.0} | 1073 {140.8} | 1029 {135.1} | 1064 {139.6} | 1257 {165.0} |
| WAR (seconds) (TAPPI) | 33 | 32 | 20 | 20 | 39 |
| MacBeth 3100 L* UV Included | 95.3 | 95.2 | 95.2 | 95.4 | 95.4 |
| MacBeth 3100 A* UV Included | -0.8 | -0.4 | -0.8 | -0.3 | 0.0 |
| MacBeth 3100 B* UV Included | 6.2 | 3.5 | 6.2 | 3.3 | 1.1 |
| MacBeth 3100 Brightness (%) UV Included | 80.6 | 83.5 | 80.3 | 84.3 | 87.1 |
| GM Break Modulus | 691 (90.7) | 817 (107) | 831 (109) | 858 (113) | 1033 (136) |
| Sheet Width inches (cm) | 7.9 (20.1) | 7.9 (20.1) | 7.9 (20.1) | 7.9 (20.1) | 7.9 (20.1) |
| Roll Diameter inches (cm) | 7.8 (19.8) | 7.9 (20.1) | 8.0 (20.3) | 7.9 (20.1) | 8.1 (20.6) |
| Roll Compression (%) | 1.3 | 1.3 | 1.2 | 1.1 | 1.1 |
| AVE MD Bending Length (cm) | 3.7 | 3.9 | 4.0 | 4.1 | 4.7 |

Table 8- Single-Ply Towel

| Roll ID | 89460 | 89460 | 89460 | 89460 | 89460 | Target | Max | Min |
|---|---|---|---|---|---|---|---|---|
| | 11443 | 11414 | 11437 | 11396 | 11137 | | | |
| NSWK | 100% | 50% | 100% | 50% | | | | |
| Recycled Fiber | | 50% | | 50% | 100% | | | |
| Parez 631 (#/T) | 9 | 6 | 9 | 3 | 0 | | | |
| PVOH(#/T) | 0.75 | 0.75 | 0.75 | 0.75 | 0.45 | | | |
| PAE (#/T) | 0.25 | 0.25 | 0.25 | 0.25 | 0.15 | | | |
| Modifier (#/T) | 0.25 | 0.25 | 0.25 | 0.25 | 0.15 | | | |
| Basis Weight 1bs/rm (gsm) | 18.4 (29.9) | 18.4 (29.9) | 21.1 (34.3) | 20.9 (34.0) | 20.0 (32.5) | **20.8** **(33.8)** | 22.0 (35.8) | 19.6 (31.9) |
| Caliper mils/8 sheets (mm/8 sheets) | 48 (1.22) | 52 (1.32) | 49 (1.24) | 53 (1.35) | 47 (1.19) | **50** **(1.27)** | 55 (1.40) | 45 (1.14) |
| Dry MD Tensile g/3" (g/cm) | 5050 (662.8) | 5374 (705.3) | 6470 (849.2) | 6345 (832.8) | 7814 (1026) | **6500** **(853)** | 8000 (1050) | 5000 (656.2) |

(continued)

| Roll ID | 89460 | 89460 | 89460 | 89460 | 89460 | Target | Max | Min |
|---|---|---|---|---|---|---|---|---|
| | 11443 | 11414 | 11437 | 11396 | 11137 | | | |
| Dry CD Tensile g/3" (g/cm) | 3678 (482.7) | 3928 (515.5) | 3869 (507.8) | 3817 (501.0) | 4314 (566.2) | **4000 (525.1)** | 5000 (656.2) | 3000 (393.7) |
| MD Stretch (%) | 7.0 | | 7.2 | 7.4 | 7.0 | **6** | 8 | 4 |
| Roll ID | 89460 | 89460 | 89460 | 89460 | 89460 | Target | Max | Min |
| | 11443 | 11414 | 11437 | 11396 | 11137 | | | |
| CD Stretch (%) | 4.9 | 5.2 | 4.8 | 5.2 | 4.9 | | | |
| Wet MD Cured Tensile g/3"(Finch) {g/cm} | 1711 {224.6} | 1557 {204.4} | 1888 {247.8} | 1851 {242.9} | 2258 {296.4} | | | |
| Wet CD Cured Tensile g/3"(Finch) {g/cm} | 1105 {145.0} | 1086 {142.5} | 1005 {131.9} | 1163 {152.6} | 1115 {146.3} | **900 {118.1}** | 1250 {164.1} | 625 {82.1} |
| WAR (seconds) (TAPPI) | 43 | 29 | 26 | 23 | 34 | **18** | 35 | 1 |
| acBeth 3100 L* UV Included | 95.1 | 95.1 | 95.0 | 95.2 | 95.5 | | | |
| acBeth 3100 A* UV Included | -0.9 | -0.4 | -0.8 | -0.4 | -0.3 | | | |
| acBeth 3100 B* UV Included | 6.2 | 3.6 | 6.1 | 3.3 | 1.4 | | | |
| acBeth 3100 Brightness (%) UV Included | 80 | 83 | 80 | 84 | 87 | | | |
| GM Break Modulus (g/cm/%) | 737 (96.7) | 734 (96.3) | 853 (112) | 793 (104) | 991 (130) | | | |
| Roll Diameter inches (cm) | 7.9 (20.1) | 8.0 (20.3) | 8.0 (20.3) | 8.1 (20.6) | 8.0 (20.3) | **8.0 (20.3)** | 7.8 (19.8) | 8.2 (20.8) |
| VE MD Bending Length (cm) | 4.0 | 4.0 | 4.2 | 4.1 | 4.8 | **4.5** | 5.3 | 3.7 |

Table 9 - Single-Ply Towel Sheet

| | Base sheet | Base sheet | Base sheet |
|---|---|---|---|
| Roll ID | 11171 | 9691 | 9806 |
| NSWK | 100% | 100% | 100% |
| Fabric | Prolux W13 | 36G | 44G |
| %Fabric Crepe | 5% | 5% | 5% |
| Refining (amps) | 48 | 43 | 44 |
| Suction (Hg) | 23 | 19 | 23 |
| WSR (#/T) | 13 | 13 | 11 |
| CMC (#/T) | 2 | 1 | 1 |
| Parez 631 (#/T) | 0 | 0 | 0 |
| PVOH (#/T) | 0.45 | 0.75 | 0.75 |

(continued)

|  | Base sheet | Base sheet | Base sheet |
|---|---|---|---|
| PAE (#/T) | 0.15 | 0.25 | 0.25 |
| Modifier (#/T) | 0.15 | 0.25 | 0.25 |
| Yankee Speed fpm (m/min) | 1599 (487.7) | 1749 (533.4) | 1749 (533.4) |
| Reel Speed fpm (m/min) | 1606 (489.8) | 1760 (536.8) | 1760 (536.8) |
| Yankee Steam psi (Bar) | 45 (3.1) | 45 (3.1) | 45 (3.1) |
| Moisture% | 2.5 | 4.0 | 2.6 |
| Caliper mils/8 sht (mm/8 sheets) | 60.2 (1.53) | 50.4 (1.28) | 51.7 (1.31) |
| Basis Weight 1b/3000 ft^2 (gsm) | 20.9 (34.0) | 20.6 (33.5) | 20.8 (33.8) |
| Tensile MD g/3 in (g/cm) | 6543 (858.7) | 5973 (783.9) | 6191 (812.5) |
| Stretch MD % | 6 | 7 | 7 |
| Tensile CDg/3 in (g/cm) | 3787 (497.0) | 3963 (520.1) | 3779 (496.0) |
| Roll ID | 11171 | 9691 | 9806 |
| Stretch CD % | 4.4 | 4.1 | 4.3 |
| Wet Tens Finch Cured-CD g/3 in. (g/cm) | 1097 (144.0) | 1199 (157.4) | 1002 (131.5) |
| Tensile GM g/3 in. (g/cm) | 4976 (653.1) | 4864 (638.4) | 4836 (634.7) |
| Water Abs Rate 0.1 mL sec | 20 | 22 | 20 |
| Break Modulus GM gms/% | 973 | 913 | 894 |
| Tensile Dry Ratio | 1.7 | 1.5 | 1.6 |
| Tensile Total Dry g/3 in (g/cm) | 10331 (1356) | 9936 (1304) | 9970(1308) |
| Tensile Wet/Dry CD | 29% | 30% | 27% |
| Overhang Dwn-MD cms | 9.8 | 7.6 | 8.0 |
| Bending Len MD Yank Do cm | 4.9 | 3.8 | 4.0 |
| Bending Len MD Yank Up cm | 5.0 | 4.8 | 4.5 |
| Overhang Yankee Up-MD cms | 9.9 | 9.6 | 9.0 |
| AVE MD Bending Length (cm) | 4.9 | 4.3 | 4.2 |

*Note,* that the present invention makes it possible to employ elevated levels of recycled fiber in the towel without unduly compromising product quality. Also, a reduced add-on rate of Yankee coatings was preferred when running 100% recycled fiber. The addition of recycled fiber also made it possible to reduce the use of dry strength resin.

While many aspects of the invention contribute no doubt to the superior performance, it is believed that the following are salient features: the amount of fabric crepe; the furnish blend which should consist of suitable fiber; the wet end additive package which may include cationic and anionic dry and wet strength resins preferably including carboxymethyl cellulose; preferably, steam pressures are reduced for manufacture of the inventive product from about 115 psi to about 70 psi (about 7.9 Bar to about 4.8 Bar) and the adhesive coating package for the Yankee is reduced by 50 or 70 percent with respect to dry creped products. So also, the modifier level in the creping adhesive is reduced substantially. The sheet moisture as it is taken from the Yankee dryer is higher when peeled in accordance with the present invention than in a dry crepe process where the moisture may be 2 percent or less. Typically, the sheet moisture in the inventive process is anywhere from about 3 to 5 percent.

A foil with a rounded front edge enhances the sheet's stability when peeling from the Yankee dryer; whereas a bow or spreader bar helps eliminate or reduce wrinkling of the sheet prior to the calender stack. A calender stack is synchronized with the reel speed prior to loading the calender stack, if on-line calendering is employed. After the calender stack has been loaded the reel speed may be increased to get a good roll structure. Further modifications to the above examples will be readily apparent to those of skill in the art. For example, if one wanted to increase stiffness, additional starch could be added to the product.

In some preferred embodiments of the present invention, the lotion composition is a "cold" lotion such as the lotions described in United States Patent No. 7,169,400, issued January 30, 2007 to Luu et al. and incorporated herein by reference in its entirety. "Cold" lotions refer to lotions that are substantially liquid at room temperature and can be applied as such to substrates. Due to the liquid state of the "cold" lotions at room temperature, they do not require heating or melting equipment and can be applied to the substrates by several available technologies such as spraying, printing, coating, extrusion or other techniques.

The cold lotion used in the present invention contains a micro-emulsion composition containing predominantly an emollient composition and a surfactant composition. The small particle size of the micro-emulsion increases the surface area of its constituents so it contributes to the utility of the present composition in increasing the interaction between the emollient and the skin surface; a desirable property for restoring the oil layer of the skin. Preferably, the micro-emulsion composition contains an external continuous non-polar or polar emollient, an internal discontinuous polar or non-polar emollient, a surfactant and a mixture of fatty alcohol co-surfactants. The lotion composition may also contain optional ingredients, including typical cosmetic additives, preservatives, plant extracts, fragrances, and medicinal agents. Any suitable combination or proportion of ingredients which produces a micro-emulsion can be used.

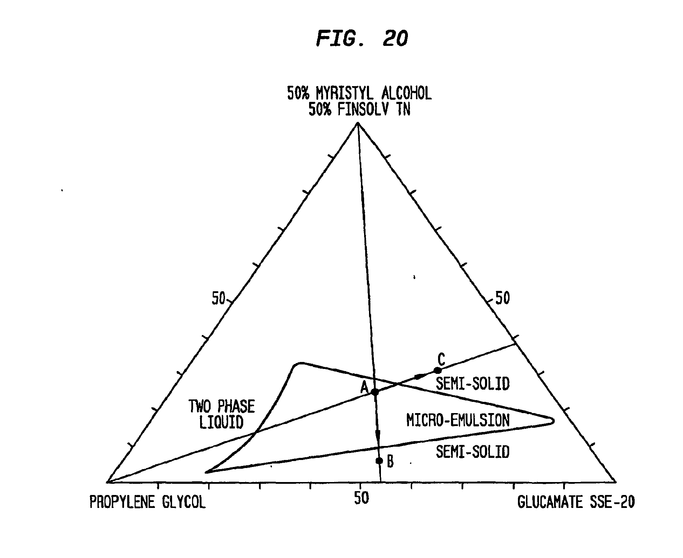

An important aspect of the cold lotion employed is, when the liquid lotion contacts the fibers or non-woven substrate, it undergoes an in-situ phase change from liquid to immobilized semi-solid or solid form. This phase change of the lotion results when the substrate web surface fibers absorb the continuous outer phase of the micro-emulsion, which may be a non-polar or polar-emollient. Subsequently, the percent of the outer phase of the micro-emulsion within the composition is reduced, resulting in increase in the percent of the internal phase of the micro-emulsion and a shift of the original lotion composition from point A (liquid micro-emulsion) to points B or C (semi-solid state), which are located outside of the micro emulsion region (see Figure 20). The immobilized antimicrobial lotion is restorable to transferable form upon contact with water and is capable of forming an aqueous gel. The compositions of the present invention are preferably chosen to lie within the micro-emulsion region of a given formulation. All percentages, ratios, and proportions of the ingredients within the compositions of the present invention are determined by the micro-emulsion region of a ternary phase diagram of the polar emollient/non-polar emollient/co-surfactant/non-ionic surfactant formulations (PE/NPE/COS/NIS). Outside of the micro-emulsion region on the low percent side of the polar or non-polar emollients, a semi-solid or solid region is preferably present. A micro-emulsion is thermodynamically stable and is essentially transparent in the visible region of the spectrum, which typically indicates that particle size diameter is preferably less than about 0.1 micron, or so. When the particle size diameter is greater than about 3,200 A (about 0.32 micron), the liquid is no longer considered a micro-emulsion but is an emulsion which can often appear turbid and be thermodynamically unstable. The micelle structure of a micro-emulsion is either a "direct" type (head out/tail in) or an "inverse" type (head in/tail out). The liquid micro-emulsion increases the surface area of the lipophilic constituent so it contributes significantly to the utility of the present composition in neat form. Fluidity on the skin surface, small particle size, high surface area and high hydrophilic character, are highly desirable properties for cleansing purposes either when the substrate is used by itself or when lotioned products are rewet with water. Any combination or proportion of these ingredients which produces a micro-emulsion can be used.

A hot lotion composition used in connection with the present invention is chosen such that its $\Delta H$ of above about 37°C is above about 10 calories/gram, $\Delta H$ of below about 37°C is above about 15 calories/gram, $\Delta H$ total (total energy to melt) of above about 37°C is above about 25 calories/gram. Further, the retention/release agent is preferably selected to have a melting point substantially higher than about room temperature but lower than about 65°C, such that the lotion onset of melting temperature is within the range of from about 30°C to about 45°C. This enables the lotion composition to maintain a substantially solid state at about room temperature and partially melted state at human skin temperature.

It should be noted that for purposes of this description, the temperature of human skin is between about 30°C to about 37°C and room temperature is between about 20°C to about 25°C.

An important aspect of a hot lotion used is that it is partially melted by body heat to enable transfer to the skin of partially liquefied and partially solid emollient(s), particles of retention/release agent and other ingredients. The partial melting of the lotion is important, because when the lotion is completely melted to liquid by body heat it is perceived as too greasy, and when a lotion is not sufficiently melted by body heat, it would not spread easily on the skin. At least a portion of the partially melted lotion resolidifies on the skin to form a smooth and moisturizing layer. Further details as to suitable hot lotion compositions are found in United States Patent No. 5,871,763 to Luu et al, the disclosure of which is incorporated herein by reference in its entirety.

Optionally included in the anti-microbial lotions are suitable anti-viral agents including those effective against, or at least retardant toward Corona virus, Picorna virus, Rhino virus, Herpes simplex, Herpes genitalis, Herpes labialis, Respiratory Syncytial Virus (RSV), Para influenza, Cytomegalovirus, Adenovirus, Condyloma and certain synergistic disease states that can involve a virus and a protozoa or a virus and any unfriendly enzymes, e.g., protease, lipase and amylase, that cause a compromised skin as a precursor state for a viral infection to occur. Specific anti-viral agents suitable for use in the lotions include bioflavonoids such as hesperitin, naringin, catechin and certain selected amino acids of leguminous origin such as L-canavanine and an analog of L-arginine; dicarboxylic acids such as malonic, glutaric, citric, succinic, and diglycolic acids; alpha hydroxy carboxylic acid such as D-galacturonic acid from Sterculia urens; neem seed oil (Azadirachta indica) in its un-denatured form; and sandalwood oil (Santalum album L.) in its un-denatured form. Optionally, the anti-viral agent could be admixed with at most about 50% by weight of the anti-viral agent of a protease inhibitor such as zinc oxide or other suitable zinc salt.

The cold or hot lotion composition can include other optional components typically present in lotions of this type. These optional components include a botanical extract, such as aloe extract, avocado oil, basil extract, sesame oil, olive oil, jojoba oil, chamomile extract, eucalyptus extract, peppermint extract, as well as animal oils such as emu oil, cod liver oil, orange roughy oil, mink oil, and the like.

The lotion of the present invention can also optionally include a humectant. Humectants are hygroscopic materials with a two-fold moisturizing action including water retention and water absorption. Humectants prevent the loss of moisture from skin and help to attract moisture from the environment. Preferred humectants include glycerol, hydrolyzed silk, ammonium lactate, hydroxypropyltrimonium hydrolyzed silk, hydroxypropyl chitosan, hydroxypropyltrimonium hydrolyzed wheat protein, lactamidopropyltrimonium chloride, and ethyl ester of hydrolyzed silk. The botanical extract, animal oil or humectant is preferably present in an amount of less than about 3% when used in the base formulation of the lotion. Further optional components include a skin refreshing agent such as encapsulated water in oil, eucalyptus oil, and menthol oil. All of these optional materials are well known in the art as additives for such formulations and can be employed in appropriate amounts in the lotion compositions of the present invention by those skilled in the art.

The lotion can optionally include a fragrance. The fragrance can be present in an amount of from 0.01% to about 2%. Suitable fragrance includes volatile aromatic esters, non-aromatic esters, aromatic aldehydes, non-aromatic aldehydes, aromatic alcohols, non-aromatic alcohols, heterocyclic aroma chemicals, and natural floral fragrances, such as blossom, carnation, gardenia, geranium, iris, hawthorne, hyacinth and jasmine.

The lotion can also optionally include natural or synthetic powder like talc, mica, boron nitride, silicone, or mixtures thereof.

The towel web of the present invention can be any suitable cellulosic substrate web, optionally wet-strengthened, and optionally including synthetic fibrous material such as melt-blown polyethylene, polypropylene, copolymers of polyethylene. The substrate also may be embossed.

Wet strength agents which may be added include temporary as well as permanent wet strength agents. Suitable wet strength agents include glyoxal; glutaraldehyde; uncharged chemical moieties selected from a group consisting of dialdehydes, aldehyde-containing polyols, uncharged aldehyde-containing polymers, and cyclic ureas and mixtures thereof, and aldehyde-containing cationic starch; mixtures of polyvinyl alcohol and salts of multivalent anions, such as boric acid or zirconium ammonium carbonates; glyoxalated polyacrylamide; polyamide-epichlorohydrin; polyamine-epichlorohydrin; urea-formaldehyde; melamine-formaldehyde; polyethyleneimine; and latex emulsions.

The present invention includes a web of cellulosic fibers treated on at least one side thereof, preferably in an amount of from about 0.1% to about 25%, more preferably from about 0.5% to about 20%, by weight of the dried fiber web with an anti-microbial lotion.

The cellulosic substrate can be prepared according to conventional processes (including TAD and variants thereof) known to those skilled in the art. A preferred towel web is a fabric-creped towel web as is used in Example 17. Lotion can be applied to the substrate according to conventional application methods known to those skilled in the art.

Lotion Examples 1-7

Formulations of the waterless lotion were prepared in which the components, their ratios and the conditions selected to provide micro-emulsion subject to in-situ phase change upon contact with a cellulosic substrate were varied as shown in the following Examples.

In preparing each formulation following, a general procedure was used. The polar phase propylene glycol was mixed with surfactant and co-surfactant in a heated container at about 60°C to about 70°C until the chemicals were completely melted. The non-polar oil phase was added to the mixture with moderate agitation for about 10 minutes, and then cooled to room temperature. At this point the lotion was in clear liquid form and ready to apply to the substrate. The micro-emulsion formed spontaneously without the need for a high shear mechanical device and is stable indefinitely.

Examples 1 to 7 (Table 10) were prepared in accordance with United States Patent No. 7,169,400, issued January 30, 2007 to Luu et al., the disclosure of which is incorporated herein by reference. Details appear in the Table. These lotion formulas were liquid at room temperature, transparent, very stable, and accordingly, the lotion ingredient ratios were inside the micro-emulsion region of phase diagrams such as Figure 20, which is a partial phase diagram of the composition of Example 1. Surprisingly, the lotion of the present invention is characterized as having a good hand-feel perception and non-greasy hand-feel, which is thought to be due to the particle size of the micro-emulsion being too small to be detected in the oil phase by the fingertips.

Table 10

| Ingredients | Ex.1 (%) | Ex.2 (%) | Ex.3 (%) | Ex. 4 (%) | Ex. 5 (%) | Ex. 6 (%) | Ex. 7 (%) |
|---|---|---|---|---|---|---|---|
| Propylene glycol | 35 | 35 | 5 | 15 | 15 | 30 | 35 |
| Finsolv TN[1] | 12.5 | 0 | 16 | 0 | 30 | 15 | 0 |
| Carnation oil[2] | 0 | 0 | 0 | 0 | 0 | 0 | 12.5 |
| Isopropyl myristate | 0 | 15 | 0 | 30 | 0 | 0 | 0 |
| Lambert CE 2000[3] | 0 | 0 | 4 | 0 | 0 | 0 | 0 |
| Myristyl alcohol($C_{14}$) | 12.5 | 15 | 0 | 0 | 0 | 0 | 12.5 |
| Kalcol1618[4] | 0 | 0 | 7.5 | 0 | 5.5 | 5.5 | 0 |
| Glucam P-20 Distearate[5] | 0 | 0 | 67.5 | 0 | 49.5 | 49.5 | 0 |
| Glucamate SSE-20[6] | 40 | 35 | 0 | 55 | 0 | 0 | 40 |

[1] Finsolv TN: $C_{12}$-$C_{15}$ alkyl benzoate ester from Finetex Inc.
[2] Carnation: Mineral oil from Witco Corp.
[3] Lambert CT 2000 - tri-octyldodecyl-citrate (Guerbet ester) from Lambert Technologies.
[4] Kalcol 1618: Mixture 50/50 of cetyl alcohol (C16) and stearyl alcohol (C18) from Kao Corp.
[5] Glucan P-20 Distearate: PEG-20 methyl glucose distearate from Amer-chol.
[6] Glucamate SSE-20: PEG-20 methyl glucose sesquistearate from Amer-chol.

Example 8

The lotion prepared in Example 1 was applied to a tissue base sheet at a 5% add-on level, then converted to a two ply tissue product. The product was tested for the amount of lotion transferred to the skin. The results were compared with commercially available lotioned tissues by comparing the light reflection of cold lotion residual on glass relative to that of two other products. The scattering of light caused by lotion smeared onto the glass microscope slide was measured by using the UV/visible spectrophotometer in the wavelength region from 700 nm to 400 nm. Lotion was transferred to the slide by holding it between two layers of lotioned tissue for 30 seconds and then rubbing the tissue over the slide 20 times in 15 seconds. The lotion smeared glass slide was placed in the sample beam of a double beam UV/Visible spectrometer to measure the light scattering. The results show that scattering of light caused by lotion smeared onto the slide rubbed with the tissue treated with the lotion in Example 1 looked identical to the control (untreated tissue). However, the two commercially available lotioned facial tissue products tested produced a significant amount of light scattering compared to the lotioned tissue of the present invention. In fact, the containers for these commercial products specifically state "not recommended for cleaning eyeglasses." In addition, from the lab test result, the amount of lotion transferred by the lotioned substrate of the present invention to the skin was measured to be about 4.2 mg/cm$^2$.

The lotioned substrate product of the present invention was able to transfer lotion to the skin for enhancing skin care benefits, while also being able to "wipe eyeglasses and still maintain clear vision." These properties of the present invention represent significant advantages over the lotioned facial tissues of the prior art.

The waterless emulsion compositions of the present invention have numerous attributes which make them particularly suitable for paper towels. For one, the waterless micro-emulsions form low viscosity aqueous micro-emulsions with relatively small amounts of water such that an immobilized lotion on the substrate is restorable to readily transferable form when wetted or mixed with water. Thus, when contacted with wet hands of a paper towel user, for example, the lotion is readily transferred from the towel to the skin of a user.

Another unique characteristic of the invention is that the lotion emulsions are capable of forming viscous gels with water as the amount of water mixed with the lotion is increased. Gels are generally more glutinous than liquids, thus being more desirable as hand lotions.

Details as to these characteristics appear in lotion Examples 9-16 below.

Lotion Examples 9-16

The composition of Example 1 was mixed with water and tested for viscosity using a Brookfield Digital Viscometer at 73°F (22.8°C). Examples 9, 10, 11 and 16 were tested with a No. 2 spindle, while Examples, 12, 13, 14 and 15 were tested with a No. 5 spindle. Details as to composition and test conditions appear in Table 11 below.

Table 11 - Aqueous Phasing Properties

| Example # / Description | Spindle # | Speed (RPM) | Viscosity (cps) | Appearance and Properties |
|---|---|---|---|---|
| 9/ 100% Lotion Example #1 | 2 | 50 | 182 | Clear Liquid |
| 10 / 95% Lotion Example #1 + 5% Water | 2 | 50 | 218 | Clear Liquid |
| 11 / 90% Lotion Example #1 1 + 10% Water | 2 | 50 | 348 | Clear Liquid |
| 12 / 85% Lotion Example #1 + 15% Water | 5 | 10 | 4,600 | Viscous gel |
| 13 / 80% Lotion Example #1 + 20% Water | 5 | 10 | 22,000 (2) | Elastic gel |
| 14 / 70% Lotion Example #1 + 30% Water | 5 | 10 | 13,000 (2&3) | Crystalline gel |
| 15/ 50% Lotion Example #1 + 50% Water | 5 | 10 | 3,500 | Viscous turbid gel |
| 16/ 20% Lotion Example #1 + 80% Water | 2 | 50 | 140 | Turbid emulsion |

It is seen in Table 11 that the water/emulsion mixtures remained a micro-emulsion up to a water concentration of between 10% and 15% by weight of the composition (Lotion Examples 9-12). At 15% water, the lotion emulsion turned into a viscous gel, which became even more viscous as additional water was added. At 20% water, the composition was an elastic gel having a viscosity of 22,000 cps, making viscosity measurement difficult. At 30% water (Example 14), the gel exhibited some opacity and appeared to have some crystalline structure appearing almost brittle. Due to the difficulty of viscosity measurement as well as the elastic and adhesive properties of the elastic gel of Example 13, the actual difference in viscosity between Examples 13, 14 may be less than indicated in Table 11.

At 50% by weight water, viscosity fell off dramatically and the composition appeared to be a viscous, turbid gel which was somewhat translucent. While the viscosities of Examples 12 and 15 were similar, the composition of Example 15 exhibited considerably more turbidity. At 80% water, viscosity was low again; however, the composition was no longer clear and appeared to be an emulsion which was somewhat turbid.

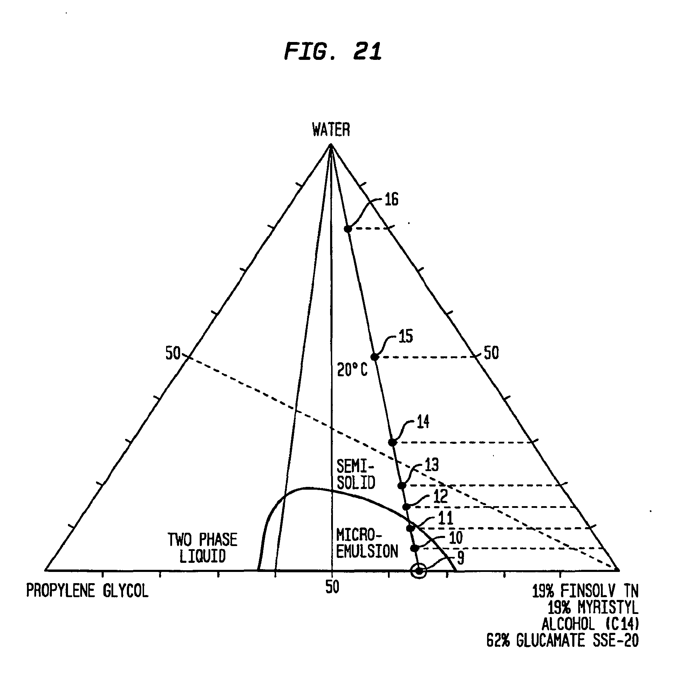

The phase behaviors of the mixtures of Table 11 are illustrated in the partial phase diagram of **Figure 21**, where it is seen that Examples 9, 10 and 11 are within the micro-emulsion region of the phase diagram. Examples 12, 13, 14 and 15 are in "semi solid" form, while Example 16 is a two-phase liquid.

Lotion Example 17 and Comparative Example A

Still further features of the invention which are highly desirable include WAR delay which promotes lotion transfer to the skin and anti-microbial action of paper towel. These features are appreciated form the discussion which follows.

Towel base sheet was prepared using 100% Douglas Fir Kraft fiber by way of a fabric crepe/Yankee dry process of the class disclosed in co-pending Patent Application Serial No. 11/451,111 (Publication No. 2006/0289134), filed June 12, 2006 entitled "Fabric-Creped Sheet for Dispensers" (Attorney Docket No. 20079; GP-05-10), the relevant disclosure of which is incorporated herein by reference in its entirety. To the base sheet, lotion was applied in 1" (2.54 cm) bands along the machine direction (alternating with 1" (2.54 cm) bands of unlotioned towel) using a Dynatec™ applicator of the class seen in United States Patent Nos.: 5,904,298; 5,902,540; and 5,882,573, the disclosures of which are incorporated herein by reference. The lotion formulation of Example 1 was used, containing additionally 2% by weight lotion triclosan anti-microbial compound, 2, 4, 4'-trichloro-2'-hydroxy diphenyl ether. Further details appear in Table 12 below.

The towel was treated for anti-microbial properties by placing a wetted specimen disk of towel in a Petri dish on inoculated agar. The anti-microbial properties are termed "negative" if microbe contamination is observed on or at the towel after incubation and "positive" if a "ring" around the test specimen is observed, indicating that microbe growth was inhibited by the towel.

Results of anti-microbial testing also appear in Table 12.

Table 12 - Anti-microbial Hand Towel Properties

| Properties | Example A No Lotion | Example 17 Lotioned |
|---|---|---|
| Anti-microbial Properties: | | |
| Staphylococcus aureus | Negative | Positive |
| E. coli | Negative | Positive |
| Salmonella sps | Negative | Positive |
| Physical Properties: | | |
| Add on rate (% of product weight) | 0% | 8 to 10% |
| Basis Weight lbs/nn (gsm) | 22.2 (36.1) | 23.5 (38.2) |
| Caliper mils/8 sheets (mm/8 sheets) | 46.0 (1.168) | 46.1 0 (1.171) |
| Dry MD Tensile g/3" (g/cm) | 6531.2 (857.2) | 5528.9 (725.7) |
| Dry CD Tensile g/3" (g/cm) | 3912.0 (513.4) | 3435.1 (450.8) |
| MD Stretch (%) | 7.4 | 7.7 |
| CD Stretch (%) | 3.3 | 3.7 |
| Wet MD Cured Tensile g/3" (Finch) {p/cm} | 1976.1 {259.4} | 2040.1 {267.8} |
| Wet CD Cured Tensile g/3" (Finch) {g/cm} | 1041.0 {136.6} | 1122.1 {147.3} |
| WAR (seconds) (TAPPI) | 34.3 | 67.6 |
| MacBeth 3100 Brightness (%) UV Excluded | 77.5 | 75.5 |
| Opacity (%) | 60.2 | 56.6 |
| SAT Capacity (g/m^2) | 125.1 | 123.0 |
| SAT Time (seconds) | 643.7 | 823.6 |
| GM Break Modulus (g/cm/%) | 1025.2 (134) | 829.0 (109) |

It is seen in Table 12 that the anti-microbial lotion was effective against staphylococcus aureous, E. coli and salmonella sps.

It is also seen that, while the absorbent capacity (SAT) of the control and the lotioned towel remained substantially the same, WAR times, or absorption rates, were considerably lengthened, perhaps due to gel blockage; consistent with the data in Table 11 above. Higher WAR values are generally not desired; however, the glutinous gel feel and initial "wetness" experienced by a towel user is a positive consequence, offsetting lower measured absorption rates and encouraging more wiping action so the anti-microbial lotion is more effective in preventing or ameliorating contamination. The apparent gel blockage also appeared to increase CD wet tensile, a common source of towel failure.

Lotion Examples B, C and 18, 19

Following the procedures detailed above, a series of paper towels were prepared from fabric-creped base sheet which was peeled from a Yankee dryer, and the lotion of Example 1. Results and details appear in Table 13, along with the corresponding data relating to Examples A and 17.

Table 13 - Towel Properties

| Example | A | 17 | B | 18 | C | 19 |
|---|---|---|---|---|---|---|
| Lotion Package | No Lotion | Ex.1 | No Lotion | Ex.1 | No Lotion | Ex.1 |
| Add on rate (% of product weight) | | 8 to 10% | | 8% | | 8% |
| Basis Weight lbs/rm (gsm) | 22.2 (36.1) | 23.5 (38.2) | 21.3 (34.7) | 22.5 (36.6) | 20.9 (34..0) | 22.4 (36.5) |
| Caliper mils/8 sheets (mm/8 sheets) | 46.0 (1.168) | 46.1 (1.171) | 45.9 (1.166) | 46.3 (1.176) | 47.6 (1.209) | 46.0 (1.168) |
| Dry MD Tensile g/3" (g/cm) | 6531.2 (857.2) | 5528.9 (725.7) | 5354.1 (702.7) | 4144.1 (543.9) | 5933.5 (778.8) | 4290.0 (563.0) |
| Dry CD Tensile g/3" (g/cm) | 3912.0 (513.4) | 3435.1 (450.8) | 3304.8 (433.7) | 2676.2 (351.2) | 3568.7 (468.4) | 2647.6 (347.5) |
| MD Stretch (%) | 7.4 | 7.7 | 6.9 | 7.0 | 7.3 | 7.5 |
| CD Stretch (%) | 3.3 | 3.7 | 3.3 | 3.5 | 3.7 | 3.9 |
| MD TEA (mm-gm/mm^2) | 3.8 | 3.3 | 2.8 | 2.3 | 3.2 | 2.5 |
| CD TEA (mm-gm/mm^2) | 1.1 | 1.0 | 0.9 | 0.8 | 1.1 | 0.8 |
| Wet MD Cured Tensile g/3" (Finch) {g/cm} | 1976.1 {259.4} | 2040.1 {267.8} | 1470.3 {193.0} | 1477.4 {193.9} | 1402.3 {184.0} | 1427.1 {187.3} |
| Lotion Package | No Lotion | Ex.1 | No Lotion | Ex. 1 | No Lotion | Ex.1 |
| Wet CD Cured Tensile g/3" (Finch) {g/cm} | 1041.0 {136.6} | 1122.1 {147.3} | 1033.5 (135.6) | 915.4 {120.1} | 927.2 {121.7} | 904.6 {118.7} |
| WAR (seconds) (TAPPI) | 34.3 | 67.6 | 24.2 | 57.3 | 26.0 | 65.0 |
| MacBeth 3100 L* UV Excluded | 93.5 | 92.9 | 94.8 | 94.2 | 94.7 | 94.1 |

(continued)

| Lotion Package | No Lotion | Ex.1 | No Lotion | Ex. 1 | No Lotion | Ex.1 |
|---|---|---|---|---|---|---|
| MacBeth 3100 A* GUV Excluded | -1.0 | -1.0 | -1.0 | -1.1 | -1.0 | -1.1 |
| MacBeth 3100 B* UV Excluded | 5.5 | 6.0 | 6.1 | 6.7 | 6.1 | 6.9 |
| MacBeth 3100 Brightness (%) UV Excluded | 77.5 | 75.5 | 79.5 | 77.6 | 79.4 | 77.1 |
| Opacity (%) | 60.2 | 56.6 | 58.6 | 52.6 | 58.2 | 51.3 |
| SAT Capacity (g/m^2) | 125.1 | 123.0 | 126.3 | 117.9 | 122.4 | 108.3 |
| SAT Time (seconds) | 643.7 | 823.6 | 319.4 | 586.8 | 287.1 | 535.1 |
| SAT Rate (g/sec^0.5) | 0.0 | 0.0 | 0.0 | 0.0 | 0.0 | 0.0 |
| GM Break Modulus (g/cm/%strain) | 1025.2 (134.6) | 829.0 (108.8) | 878.7 (115.3) | 667.3 (87.6) | 886.5 (116.4) | 622.1 (81.6) |
| Sheet Width Inches (cm) | 10.1 (25.7) | 10.1 (25.7) | 10.0 (25.4) | 10.0 (25.4) | 10.0 (25.4) | 10.0 (25.4) |
| Roll Diameter inches (cm) | 7.4 (18.8) | 7.7 (19.6) | 8.0 (20.3) | 8.0 (20.3) | 8.0 (20.3) | 8.0 (20.3) |
| Roll Compression (%) | 1.2 | 1.2 | 1.3 | 1.3 | 0.8 | 1.2 |
| AVE MD Bending Length (cm) | 4.1 | 4.0 | 3.7 | 3.5 | 3.6 | 3.4 |
| Overhang Length- MD (Yankee) (cms) | 8.2 | 7.9 | 7.2 | 6.7 | 7.6 | 7.0 |
| Overhang Length- MD (Yank D) (cms) | 8.4 | 8.0 | 7.5 | 7.2 | 6.9 | 6.5 |
| Lotion Package | No Lotion | Ex.1 | No Lotion | Ex.1 | No Lotion | Ex.1 |
| Bending Length MD-Yankee Down (cm) | 4.2 | 4.0 | 3.8 | 3.6 | 3.5 | 3.3 |
| Bending Length MD-Yankee Up(cm) | 4.1 | 3.9 | 3.6 | 3.3 | 3.8 | 3.5 |
| SAT (g Water/ G fiber) | 3.5 | 3.2 | 3.6 | 3.2 | 3.6 | 3.0 |

(continued)

| Lotion Package | No Lotion | Ex.1 | No Lotion | Ex.1 | No Lotion | Ex.1 |
|---|---|---|---|---|---|---|
| CD Wet/Dry Ratio | 26.6% | 32.7% | 31.3% | 34.2% | 26.0% | 34.2% |

It is seen in Table 13 that the CD wet/dry tensile is increased to over 27.5% and generally is in the range of from 27.5% to 40% such as between about 30% and 35%. This property is significant for better hand feel. The tensiles and GM break modulus for the lotioned towel are significantly reduced with respect to the unlotioned towel. In this respect, Example 18 is a lotioned towel version of the same towel as comparative Example B, while Example 19 is a lotioned version of the same towel as comparative Example C. That is, Example 18 is a lotioned version of "like" unlotioned towel B, while Example 19 is a lotioned version of other "like" unlotioned towel C, which are otherwise of the same composition and construction.

In typical cases, the MD tensile of a lotioned towel is 10-15% or 20% less than that of a like unlotioned towel. So also the GM modulus is 15%-20% or 30% less than that of a like unlotioned towel. The CD wet/dry tensile ratio is typically at least 5 points higher than the CD wet/dry tensile of a like unlotioned towel; that is, for example, 35% for the lotioned towel versus 30% for a like unlotioned towel. In many cases, a lotioned towel of the invention has a CD wet/dry tensile ratio at least 7 points higher than that of a like unlotioned towel.

Lotion Examples 20-24

The lotion compositions in the following examples comprise a base lotion with and without a pH balancing agent. Examples 20 and 21 are comparative and contain no pH balancing agent, and Examples 22-24 relate to lotion compositions combined with a pH balancing agent. Further detail is seen in United States Patent No. 6,352,700 to Luu et al, the disclosure of which is incorporated herein in its entirety.

The lotions in Examples 22-24 were prepared according to the following procedure: the base lotion ingredients, i.e., emollient(s), release and retention agent and surfactants were mixed together and heated to 75°C until the mixture was completely melted. *Note* lotion composition components in Table 14. The lotion composition mixture was maintained at 75°C for about 15 minutes with moderate agitation. The pH balancing compound was then added, using high agitation, until the compound was completely melted and blended. The pH value for each lotion was determined by emulsifying 0.276 g of solid lotion (equivalent to the lotion amount contained in 5 sheets of 15% lotionized tissue) in 20 ml tap water (pH=8.65) at 23° C. The emulsion was shaken for 5 minutes before measuring pH using a standard calibrated pH meter.

Table 14 -pH Balanced Lotions

| Chemicals | Example 20 (%) | Example 21 (%) | Example 22 (%) | Example 23 (%) | Example 24 (%) |
|---|---|---|---|---|---|
| Finsolv TN-C12-C15 alkyl benzoate | 30 | 35 | 35 | 30 | 30 |
| Crodacol CS 50 (Cetearyl alcohol) | 57 | 65 | 63 | 56 | 55 |
| Clucate SS (methyl glucose sesquistearate) | 3 | 0 | 0 | 3 | 3 |
| Glucamate SSE-20 (PEG-20 methyl glucose | 10 | 0 | 0 | 10 | 10 |
| Glycolic acid | 0 | 0 | 2 | 1 | |
| Lactic acid | 0 | 0 | 0 | 0 | 2 |
| pH | 7.8 | 7.2 | 4.6 | 4.9 | 5.3 |

While the invention has been described in connection with numerous examples, modifications to those examples within the spirit and scope of the invention will be readily apparent to those of skill in the art. In view of the foregoing discussion, relevant knowledge in the art and references including copending applications discussed above, the disclosures of which are all incorporated herein by reference, further description is deemed unnecessary.

The present invention, in addition, provides the following embodiments:

(1) An anti-microbial paper towel for use with touchless automatic dispensers comprising:

a) a cellulosic web characterized in that the web is substantially without crepe bars and has an unlotioned MD bending length of at least 3 cm; and

b) a transferable lotion composition comprising an emollient and anti-microbial agent, the lotion composition being immobilized on the cellulosic web in a semi-solid or solid form,

wherein the transferable lotion composition is selected from lotion compositions which are transferable upon contact with water or lotion compositions which are transferable upon application of body heat.

(2) The anti-microbial paper towel according to (1),wherein the lotion composition comprises from about 0.01% to about 10% by weight anti-microbial agent.

(3) The anti-microbial paper towel according to (1) wherein the lotion composition comprises from about 0.05% to about 5% by weight anti-microbial agent.

(4) The anti-microbial paper towel according to (1) comprising an anti-microbial agent selected from: 2,4,4'-trichloro-2'-hydroxydiphenyl ether, 3,4,4'-trichlorocarbanilide; 3,4,4'-trifluoromethyl-4,4'-d-ichlorocarbanilide; 5-chloro-2-methyl-4-isothiazolin-3-one; iodopropynlbutylcarbamate; 8-hydroxyquinoline; 8-hydroxyquinoline citrate; 8-hydroxyquinoline sulfate; 4-chloro-3,5-xylenol; 2-bromo-2-nitropropane-1,3-diol; diazolidinyl urea; butoconazole; nystatin; terconazole; nitrofurantoin; phenazopyridine; acyclovir, clortrimazole; chloroxylenol; chlorhexidine; chlorhexidine gluconate; miconazole; terconazole; butylparaben; ethylparaben; methylparaben; methylchloroisothiazoline; methylisothiazoline; a mixture of 1,3-bis(hydroxymethyl)-5,5-dimethylhydantoin and 3-iodo-2-propynyl butyl carbamate; oxyquinoline; EDTA; tetrasodium EDTA; p-hydroxyl benzoic acid ester; alkyl pyridinum compounds; coco phosphatidyl PG-dimonium chloride; chlorhexidene digluconate; chlorhexidene acetate; chlorhexidene isethionate; chlorhexidene hydrochloride; benzalkonium chloride; benzethonium chloride; polyhexamethylene biguanide, and mixtures thereof.

(5) The anti-microbial paper towel according to (1) wherein the anti-microbial agent comprises a zinc salt.

(6) The anti-microbial paper towel according to (1), wherein the cellulosic web is predominantly softwood fiber.

(7) The anti-microbial paper towel according to (1), wherein the cellulosic web comprises at least about 25% by weight of recycle fiber.

(8) The anti-microbial paper towel according to (1), wherein the cellulosic web comprises at least about 50% by weight of recycle fiber.

(9) The anti-microbial paper towel according to (1), wherein the cellulosic web comprises at least about 75% or more by weight of recycle fiber.

(10) The anti-microbial paper towel according to (1), wherein the cellulosic web comprises 100% by weight of recycle fiber.

(11) The anti-microbial paper towel according to (1), wherein the web comprises a wet strength agent

(12) The anti-microbial paper towel according to (11), wherein the wet strength agent is selected from aldehyde-containing polyols, aldehyde-containing cationic starch, glyoxal, glutaraldehyde, dialdehydes, boric acid carbonate, zirconium ammonium carbonate, glyoxalated polyacrylamide, polyamide-epichlorohydrin, polyamine-epichlorohydrin, urea-formaldehyde, melamine-formaldehyde, polyethyleneimine, and latex emulsions.

(13) The anti-microbial paper towel according to (11), wherein the transferable lotion composition disposed on the web is selected and applied in amounts such that it imparts a water absorption rate delay of at least about 25% to the cellulosic web.

(14) The anti-microbial paper towel according to (1), wherein the transferable lotion composition disposed on the web is selected and applied in amounts such that it imparts a water absorption rate delay to the cellulosic web of at least about 50%.

(15) The anti-microbial paper towel according to (1), wherein the transferable lotion composition disposed on the web is selected and applied in amounts such that it imparts a water absorption delay to the cellulosic web of at least about 75%.

(16) The anti-microbial paper towel according to (1), wherein the transferable lotion composition disposed on the web is selected and applied in amounts such that it imparts a water absorption delay to the cellulosic web of at least about 100%.

(17) The anti-microbial paper towel according to (1), wherein the unlotioned cellulosic web has substantially the same SAT value as the lotioned paper towel.

(18) The anti-microbial paper towel according to (1), wherein the paper towel has a SAT value of at least about 2.5 g/g.

(19) The anti-microbial paper towel according to (1), wherein the paper towel has a SAT value of at least about 3 g/g.

(20) The anti-microbial paper towel according to (1), wherein the paper towel has a SAT value of at least about 4 g/g.

(21) The anti-microbial paper towel according to (1), wherein the paper towel has a SAT value of at least about 4.5 g/g.

(22) The anti-microbial paper towel according to (1), wherein the paper towel has a SAT value of from about 2.5 g/g to about 5 g/g.

(23) The anti-microbial paper towel according to (1), wherein the transferable lotion is applied to the cellulosic web in an amount of from about 2 weight percent to about 20 weight percent, based on the weight of fiber in the web.

(24) The anti-microbial paper towel according to (1), wherein the transferable lotion is applied to the cellulosic web in an amount of from about 3 percent by weight to about 15 percent by weight, based on the weight of fiber in the web.

(25) The anti-microbial paper towel according to (1), wherein the transferable lotion is applied to the cellulosic web in an amount of from about 4 percent by weight to about 12 percent by weight, based on the weight of fiber in the web.

(26) The anti-microbial paper towel according to (1), wherein the unlotioned cellulosic web has a basis weight of from about 15 g/m$^2$ to about 65 g/m$^2$.

(27) The anti-microbial paper towel according to (1), wherein the unlotioned cellulosic web has a basis weight of from about 25 g/m$^2$ to about 50 g/m$^2$.

(28) The anti-microbial paper towel according to (1), wherein the unlotioned cellulosic web has a basis weight of from about 30 g/m$^2$ to about 40 g/m$^2$.

(29) The anti-microbial paper towel according to (1), wherein the web has an unlotioned MD bending length of from about 3.5 cm to about 5 cm.

(30) The anti-microbial paper towel according to (1), wherein the web has an unlotioned MD bending length of from about 3.75 cm to about 4.5 cm.

(31) The anti-microbial paper towel according to (1), wherein the web has an unlotioned MD bending length of at least about 3.5 cm.

(32) The anti-microbial paper towel according to (1), wherein the web has an unlotioned MD stretch of at least about 5%.

(33) The anti-microbial paper towel according to (1), having an unlotioned MD stretch of at least about 6%.

(34) The anti-microbial paper towel according to (1), having an unlotioned MD stretch of at least about 7%.

(35) The anti-microbial paper towel according to (1), having an unlotioned MD stretch of at least about 7.5%.

(36) The anti-microbial paper towel according to (1), having an unlotioned MD stretch of at least about 8%.

(37) The anti-microbial paper towel according to (1), having an unlotioned MD stretch of at least about 9%.

(38) The anti-microbial paper towel according to (1), provided with identifying indicia indicating its anti-microbial lotion features.

(39) An anti-microbial paper towel for use with touchless automatic dispensers comprising:

a) a cellulosic web characterized in that the web is substantially without crepe bars; and

b) a transferable lotion composition comprising an emollient and anti-microbial agent, the lotion composition being immobilized on the cellulosic web in a semi-solid or solid form,

wherein the transferable lotion composition is selected from lotion compositions which are transferable upon contact with water or lotion compositions which are transferable upon application of body heat; and wherein the lotioned towel has an MD bending length of at least 3 cm.

(40) The anti-microbial paper towel according to (39), wherein the lotioned towel has an MD bending length of from about 3 cm to about 5 cm.

(41) The anti-microbial paper towel according to (39), wherein the lotioned towel has an MD bending length of from about 3.25 cm to about 5 cm.

(42) The anti-microbial paper towel according to (39), wherein the lotioned towel has an MD bending length of at least about 3.25 cm.

(43) The anti-microbial paper towel according to (39), wherein the lotioned towel has a CD wet/dry tensile ratio of at least about 25%.

(44) The anti-microbial paper towel according to (39), wherein the lotioned towel has a CD wet/dry tensile ratio of at least about 28%.

(45) The anti-microbial paper towel according to (39), wherein the lotioned towel has a CD wet/dry tensile ratio of at least about 32%.

(46) The anti-microbial paper towel according to (39), wherein the lotioned towel has a CD wet/dry tensile ratio of from 25% to 40%.

(47) The anti-microbial paper towel according to (39), wherein the lotioned towel has a wet/dry CD ratio in % of at least 5 points higher than a like unlotioned towel.

(48) The anti-microbial paper towel according to (39), wherein the lotioned towel has a wet/dry CD ratio in % of at least 7 points higher than a like unlotioned towel.

(49) The anti-microbial paper towel according to (39), wherein the lotioned towel has a GM break modulus at least 15% lower than a like unlotioned towel.

(50) The anti-microbial paper towel according to (39), wherein the lotioned towel has a GM break modulus at least 20% lower than a like unlotioned towel.

(51) The anti-microbial paper towel according to (39), wherein the lotioned towel has a GM break modulus at least 25% lower than a like unlotioned towel.

(52) The anti-microbial paper towel according to (39), wherein the lotioned towel has a dry MD tensile strength at least 10% lower than a like unlotioned towel.

(53) The anti-microbial paper towel according to (39), wherein the lotioned towel has a dry MD tensile strength at least 15% lower than a like unlotioned towel.

(54) The anti-microbial paper towel according to (39), wherein the lotioned towel has a dry MD tensile strength at least 20% lower than a like unlotioned towel.

(55) An anti-microbial paper towel comprising:

a) a cellulosic towel web characterized in that the web is substantially without crepe bars and has an unlotioned MD bending length of at least 3.5 cm; and

b) a lotion emulsion including an anti-microbial agent disposed on the web, the lotion emulsion including a polar emollient and a non-polar emollient as well as a surfactant composition comprising a nonionic surfactant, wherein the lotion emulsion is substantially liquid at room temperature, the emollients and surfactant composition are selected such that the lotion emulsion is immobilized on the web in a semi-solid or solid state and wherein further the lotion emulsion is capable of forming an aqueous gel upon contact with water.

(56) The anti-microbial paper towel according to (55), wherein the lotion emulsion comprises polar emollient in an amount of from about 2% to about 40% by weight of the lotion emulsion.

(57) The anti-microbial paper towel according to (55), wherein the lotion emulsion comprises a polar polyhydroxy emollient selected from propylene glycol, glycol, glycerol, diethylene glycol, methylene glycol, polypropylene glycol, polyethylene glycol and sorbitol.

(58) The anti-microbial paper towel according to (55), wherein the lotion emulsion comprises non-polar emollient in the amount of from about 10% to about 40% by weight of the lotion emulsion.

(59) An anti-microbial paper towel comprising:

a) a cellulosic towel web characterized in that the web is substantially without crepe bars and has an unlotioned MD bending length of at least 3.5 cm; and

b) a transferable lotion composition disposed on the web comprising an emollient, an anti-microbial agent, and a retention/release agent such that the lotion has a $\Delta H$ above about 37°C of more than about 10 calories/gram, a total heat of melting of above about 25 calories/gram, and an onset of melting temperature of at least about 30°C.

(60) The anti-microbial paper towel according to (59), wherein the lotion composition further comprises a surfactant composition in the amount of from about 10% to about 15% by weight of the lotion composition.

(61) The anti-microbial paper towel according to (60), wherein the lotion composition further comprises a surfactant selected from methyl glucoside sesquistearate, ethoxylated methyl glucoside sesquistearate containing 20 moles of oxyethylene units, or combinations thereof.

(62) A method of dispensing a disposable anti-microbial paper towel comprising:

a) disposing paper towel in an automatic touchless dispenser which is adapted to generate a touchless proximity signal upon nearness of a consumer, the towel including: (i) a cellulosic web characterized in that the web is substantially without crepe bars and has an unlotioned MD bending length of at least 3.5 cm; and (ii) a transferable lotion composition comprising an emollient and anti-microbial agent, the lotion composition being immobilized on the cellulosic web in a semi-solid or solid form,
wherein the transferable lotion composition is selected from lotion compositions which are transferable upon contact with water or lotion compositions which are transferable upon application of body heat; and

b) dispensing the paper towel in response to the proximity signal.

(63) A method of making a fabric-creped absorbent anti-microbial paper towel with improved dispensing characteristics comprising:

a) compactively dewatering a papermaking furnish to form a nascent web;

b) applying the dewatered web to a translating transfer surface moving at a first speed;

c) fabric-creping the web from the transfer surface at a consistency of from about 30 to about 60 percent utilizing a patterned creping fabric, the creping step occurring under pressure in a fabric creping nip defined between the transfer surface and the creping fabric wherein the fabric is traveling at a second speed slower than the speed of said transfer surface, the fabric pattern, nip parameters, velocity delta and web consistency being selected such that the web is creped from the transfer surface and transferred to the creping fabric;

d) adhering the web to a drying cylinder with a resinous adhesive coating composition;

e) drying the web on the drying cylinder; and

f) peeling the web from the drying cylinder;
wherein the furnish, creping fabric and creping adhesive are selected and the velocity delta, nip parameters and web consistency, caliper and basis weight are controlled such that the MD bending length of the dried web is at least about 3.5 cm, and

g) applying a transferable lotion composition to the web, the lotioned composition comprising an emollient and anti-microbial agent, the lotion composition being immobilized on the cellulosic web in a semi-solid or solid form, wherein the transferable lotion composition is selected from lotion compositions which are transferable upon contact with water or lotion compositions which are transferable upon application of body heat.

(64) The anti-microbial paper towel produced according to (63), wherein the anti-microbial agent is selected from: 2,4,4'-trichloro-2'-hydroxydiphenyl ether; 3,4,4'-trichlorocarbanilide; 3,4,4'-trifluoromethyl-4,4'-d-ichlorocarbanilide; 5-chloro-2-methyl-4-isothiazolin-3-one; iodopropynlbutylcarbamate; 8-hydroxyquinoline; 8-hydroxyquinoline citrate; 8-hydroxyquinoline sulfate; 4-chloro-3,5-xylenol; 2-bromo-2-nitropropane-1,3-diol; diazolidinyl urea; butoconazole; nystatin; terconazole; nitrofurantoin; phenazopyridine; acyclovir; clortrimazole; chloroxylenol; chlorhexidine; chlorhexidine gluconate; miconazole; terconazole; butylparaben; ethylparaben; methylparaben; methylchloroisothiazoline; methylisothiazoline; a mixture of 1,3-bis(hydroxymethyl)-5,5-dimethylhydantoin and 3-iodo-2-propynyl butyl carbamate; oxyquinoline; EDTA; tetrasodium EDTA; p-hydroxyl benzoic acid ester; alkyl pyridinum compounds; coco phosphatidyl PG-dimonium chloride; chlorhexidene digluconate; chlorhexidene acetate; chlorhexidene isethionate; chlorhexidene hydrochloride; benzalkonium chloride; benzethonium chloride; polyhexamethylene biguanide, and mixtures thereof.

**Claims**

1. An anti-microbial paper towel comprising:

a) a cellulosic web **characterized in that** the web is substantially without crepe bars and has an unlotioned MD bending length of at least 3.5 cm as measured by ASTM test method D-1388-96, cantilever option; and
b) a transferable lotion composition selected from the group consisting of:

i) lotion compositions transferable upon application of body heat comprising an emollient, an anti-microbial agent, and a retention/release agent, the lotion composition being chosen such that the lotion has a $\Delta H$ above 37°C of more than 10 calories/gram, a total heat of melting of above 25 calories/gram, and an onset of melting temperature of at least 30°C; and
ii) micro-emulsion lotion compositions transferable upon contact with water lotion including a polar emollient and a non-polar emollient as well as a nonionic surfactant composition wherein the micro-emulsion lotion is substantially liquid at room temperature, the emollients and surfactant composition are selected such that the lotion emulsion is immobilized on the web in a semi-solid or solid state and wherein further the lotion emulsion is capable of forming an aqueous gel upon contact with water;
said transferable lotion further comprising from 0.01% to 10% by weight anti-microbial agent.

2. The anti-microbial paper towel according to Claim 1, wherein the lotion emulsion comprises polar emollient in an amount of from 2% to 40% by weight of the lotion emulsion.

3. The anti-microbial paper towel according to Claim 1 or 2, wherein the lotion emulsion comprises a polar polyhydroxy emollient selected from propylene glycol, glycol, glycerol, diethylene glycol, methylene glycol, polypropylene glycol, polyethylene glycol and sorbitol.

4. The anti-microbial paper towel according to Claim 1, 2 or 3, wherein the lotion emulsion comprises non-polar emollient in the amount of from 10% to 40% by weight of the lotion emulsion.

5. The anti-microbial paper towel according to any of Claims 1-4, comprising an anti-microbial agent selected from: 2,4,4'-trichloro-2'-hydroxydiphenyl ether; 3,4,4'-trichlorocarbanilide; 3,4,4'-trifluoromethyl-4,4'-dichlorocarbanilide; 5-chloro-2-methyl-4-isothiazolin-3-one; iodopropynlbutylcarbamate; 8-hydroxyquinoline; 8-hydroxyquinoline citrate; 8-hydroxyquinoline sulfate; 4-chloro-3,5-xylenol; 2-bromo-2-nitropropane-1,3-diol; diazolidinyl urea; butoconazole; nystatin; terconazole; nitrofurantoin; phenazopyridine; acyclovir; clortrimazole; chloroxylenol; chlorhexidine; chlorhexidine gluconate; miconazole; terconazole; butylparaben; ethylparaben; methylparaben; methylchloroisothiazoline; methylisothiazoline; a mixture of 1,3-bis(hydroxymethyl)-5,5-dimethylhydantoin and 3-iodo-2-propynyl butyl carbamate; oxyquinoline; EDTA; tetrasodium EDTA; p-hydroxyl benzoic acid ester; alkyl pyridinum compounds; coco phosphatidyl PG-dimonium chloride; chlorhexidene digluconate; chlorhexidene acetate; chlorhexidene isethionate; chlorhexidene hydrochloride; benzalkonium chloride; benzethonium chloride; polyhexamethylene biguanide, zinc salts and mixtures thereof.

6. The anti-microbial paper towel according to any of Claims 1-4, wherein the paper towel has a SAT value of at least 2.5 g/g.

7. The anti-microbial paper towel according to any of Claims 1-4, wherein the paper towel has a SAT value of at least 3 g/g.

8. The anti-microbial paper towel according to any of Claims 1-4, wherein the paper towel has a SAT value of at least 4.5 g/g.

9. The anti-microbial paper towel according to any of Claims 1-4, wherein the paper towel has a SAT value of from 2.5 g/g to 5 g/g.

10. The anti-microbial paper towel according to any of Claims 1-4, wherein the lotioned towel has an MD bending length of from 3 cm to 5 cm as measured by ASTM test method D-1388-96, cantilever option.

11. The anti-microbial paper towel according to any of Claims 1-4, wherein the lotioned towel has an MD bending length of from 3.25 cm to 5 cm as measured by ASTM test method D-1388-96, cantilever option.

12. The anti-microbial paper towel according to any of Claims 1-4, wherein the lotioned towel has an MD bending length of at least 3.25 cm as measured by ASTM test method D-1388-96, cantilever option.

13. The anti-microbial paper towel according to any of Claims 1-4, wherein the lotioned towel has a CD wet/dry tensile ratio of at least 25%.

14. The anti-microbial paper towel according to any of Claims 1-4, wherein the lotioned towel has a CD wet/dry tensile ratio of from 25% to 40%.

15. The anti-microbial paper towel according to any of Claims 1-4, wherein the lotioned towel has a dry MD tensile strength at least 15% lower than a like unlotioned towel.

16. An anti-microbial paper towel comprising:

   a) a cellulosic web **characterized in that** the web is substantially without crepe bars and has an unlotioned MD bending length of at least 3.5 cm as measured by ASTM test method D-1388-96, cantilever option; and
   b) a transferable lotion composition selected from the group consisting of:

i) lotion compositions transferable upon application of body heat comprising an emollient, an anti-microbial agent, and a retention/release agent, the lotion composition being chosen such that the lotion has a ΔH above 37°C of more than 10 calories/gram, a total heat of melting of above 25 calories/gram, and an onset of melting temperature of at least 30°C; and

ii) micro-emulsion lotion compositions transferable upon contact with water lotion including a polar emollient and a non-polar emollient as well as a nonionic surfactant composition wherein the micro-emulsion lotion is substantially liquid at room temperature, the emollients and surfactant composition are selected such that the lotion emulsion is immobilized on the web in a semi-solid or solid state and wherein further the lotion emulsion is capable of forming an aqueous gel upon contact with water;

said transferable lotion further comprising an anti-microbial agent.

# FIG. 1

FIG. 2

FIG. 3

FIG. 4

FIG. 5

FIG. 6

FIG. 7

FIG. 8

FIG. 9

FIG. 10

FIG. 11

FIG. 12

**FIG. 13**

## FIG. 14

UNCREPED TAD SIDE 1 (10x)

## FIG. 15

UNCREPED TAD SIDE 2 (10x)

## FIG. 16

FABRIC CREPE AIR SIDE (10x)

## FIG. 17

FABRIC CREPE YANKEE SIDE (10x)

## FIG. 18

FIG. 19

## FIG. 20

50% MYRISTYL ALCOHOL
50% FINSOLV TN

50                    50

C
A          SEMI-SOLID

TWO PHASE
LIQUID                MICRO-EMULSION

SEMI-SOLID
B

PROPYLENE GLYCOL          50          GLUCAMATE SSE-20

# FIG. 21

WATER

16

15

20°C

14

SEMI-
SOLID 13

12

11

10

TWO PHASE
LIQUID

MICRO-
EMULSION 9

50 50

50

PROPYLENE GLYCOL 50

19% FINSOLV TN
19% MYRISTYL
ALCOHOL (C14)
62% GLUCAMATE SSE-20

Europäisches
Patentamt

European
Patent Office

Office européen
des brevets

# EUROPEAN SEARCH REPORT

Application Number

EP 11 00 7482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/110432 A1 (LUU PHUONG V [US] ET AL) 25 May 2006 (2006-05-25) * paragraphs [0002], [0008] - [0016], [0021] - [0031], [0037]; claims 1-31; figures 1,2; examples 1-17 * ----- | 1-16 | INV. B32B33/00 B65G59/06 D21F11/00 A61K9/10 D21H21/36 D21F11/14 |
| X | US 6 352 700 B1 (LUU PHUONG V [US] ET AL) 5 March 2002 (2002-03-05) * the whole document * ----- | 1-16 | |
| X | EP 0 875 233 A (FORT JAMES CORP [US]) 4 November 1998 (1998-11-04) * page 2, line 5 - line 10 * * page 3, line 49 - page 7, line 47; claims 1-36 * ----- | 1-16 | |
| X | US 6 733 773 B1 (HSU JAY C [US] ET AL) 11 May 2004 (2004-05-11) * the whole document * ----- | 1-16 | |

TECHNICAL FIELDS
SEARCHED      (IPC)

B32B
B65G
D21F
D21H
A61K

The present search report has been drawn up for all claims

| Place of search | Date of completion of the search | Examiner |
|---|---|---|
| Munich | 14 November 2011 | Hindia, Evangelia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 7482

This annex lists the patent family members relating to the patent documents cited in  the above-mentioned European search report.
The members are as contained in the European Patent Office EDP file on
The European Patent Office is in no way liable for these particulars which are merely given for the purpose of information.

14-11-2011

| Patent document cited in search report | | Publication date | Patent family member(s) | | Publication date |
|---|---|---|---|---|---|
| US 2006110432 | A1 | 25-05-2006 | CA | 2629941 A1 | 14-06-2007 |
| | | | CN | 101325949 A | 17-12-2008 |
| | | | EP | 1962816 A2 | 03-09-2008 |
| | | | JP | 2009518559 A | 07-05-2009 |
| | | | US | 2006110432 A1 | 25-05-2006 |
| | | | WO | 2007067873 A2 | 14-06-2007 |
| US 6352700 | B1 | 05-03-2002 | CA | 2306594 A1 | 03-11-2000 |
| | | | EP | 1050297 A2 | 08-11-2000 |
| | | | TR | 200001215 A2 | 21-12-2000 |
| | | | US | RE41883 E1 | 26-10-2010 |
| | | | US | 6352700 B1 | 05-03-2002 |
| EP 0875233 | A | 04-11-1998 | CA | 2235846 A1 | 24-10-1998 |
| | | | EP | 0875233 A1 | 04-11-1998 |
| | | | US | 5871763 A | 16-02-1999 |
| US 6733773 | B1 | 11-05-2004 | AU | 3277102 A | 03-06-2002 |
| | | | BR | 0115510 A | 03-02-2004 |
| | | | CA | 2427245 A1 | 30-05-2002 |
| | | | DE | 60127992 T2 | 17-01-2008 |
| | | | EP | 1341516 A2 | 10-09-2003 |
| | | | MX | PA03003839 A | 28-07-2003 |
| | | | US | 6733773 B1 | 11-05-2004 |
| | | | WO | 0241869 A2 | 30-05-2002 |
| | | | ZA | 200303131 A | 23-04-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60815983 B
- US 20020061500 A
- US 5945910 A
- US 5781942 A
- US 6766977 B, Denen
- US 6793170 B, Denen
- US 6592067 B, Denen
- US 6838887 B
- US 6871815 B, Moody
- US 6412678 B
- US 6321963 B, Gracyalny
- US 4529480 A, Trokhan
- US 5607551 A, Farrington
- US 11678669 B
- US 11451112 B
- US 20060289133 A
- US 11451111 B
- US 20060289134 A
- US 11402609 B
- US 20060237154 A
- US 11151761 B
- US 20050279471 A
- US 11108458 B
- US 20050241787 A
- US 11108375 B
- US 20050217814 A
- US 11104014 B
- US 20050241786 A
- US 10679862 B
- US 20040238135 A
- US 60903789 B
- US 11804246 B
- US 3994771 A, Morgan, Jr.
- US 4102737 A, Morton
- US 6187137 B, Druecke
- US 5888347 A
- US 5667636 A
- US 5614293 A
- US 5601871 A
- US 11728407 B
- US 6352700 B, Luu
- US 5871763 A, Luu
- US 11297201 B
- US 20060110432 A
- US 11557782 B
- US 7169400 B, Luu
- US 4528316 A, Soerens
- US 10409042 B
- US 200510006040 A1
- US 5657797 A
- US 5368696 A
- US 4973512 A
- US 5023132 A
- US 5225269 A
- US 5182164 A
- US 5372876 A
- US 5618612 A
- US 4533437 A, Curran
- US 4239065 A, Trokhan
- US 3974025 A, Ayers
- US 5449026 A
- US 5690149 A
- US 4490925 A, Smith
- WO 20060289134 A
- US 5904298 A
- US 5902540 A
- US 5882573 A